(19) Europäisches Patentamt
European Patent Office
Office européen des brevets

(11) **EP 4 351 258 A1**

(12) **EUROPEAN PATENT APPLICATION**

(43) Date of publication:
**10.04.2024 Bulletin 2024/15**

(51) International Patent Classification (IPC):
**H04W 72/232** (2023.01)      **H04L 5/00** (2006.01)

(21) Application number: **23200025.7**

(22) Date of filing: **27.09.2023**

(52) Cooperative Patent Classification (CPC):
**H04W 72/232; H04L 5/0053;** H04L 5/001;
H04W 76/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2022 US 202263414093 P**

(71) Applicant: **ASUS Technology Licensing Inc. Taipei City 112028 (TW)**

(72) Inventors:
• **LI, Ming-Che**
  **112028 Taipei City (TW)**
• **HUANG, Chun-Wei**
  **112028 Taipei City (TW)**
• **TSENG, Li-Chih**
  **112028 Taipei City (TW)**

(74) Representative: **Hoefer & Partner Patentanwälte mbB**
  **Pilgersheimer Straße 20**
  **81543 München (DE)**

(54) **METHOD AND APPARATUS OF DOWNLINK CONTROL INFORMATION FOR SCHEDULING SIDELINK REFERENCE SIGNAL IN A WIRELESS COMMUNICATION SYSTEM**

(57)      Methods, systems, and apparatuses can comprise a first device in a wireless communication system receiving configuration of one or more first sidelink resource pools for at least sidelink data transmission and configuration of one or more second sidelink resource pools for sidelink reference signal transmission (1022), receiving a Downlink Control Information, DCI, for sidelink, wherein the DCI comprises a resource pool index corresponding to one sidelink resource pool (1024), determining the DCI for scheduling sidelink data transmission or sidelink reference signal transmission based on at least the resource pool index or the one sidelink resource pool (1026), acquiring or determining fields or information in the DCI based on the determination that the DCI is for scheduling sidelink data transmission or sidelink reference signal transmission (1028), determining a sidelink resource based on the acquired or determined fields, or the information in the DCI (1030), and performing a sidelink transmission on the sidelink resource in the one sidelink resource pool (1032).

1020

Receiving configuration of one or more first sidelink resource pools for at least sidelink data transmission and configuration of one or more second sidelink resource pools for sidelink reference signal — 1022

Receiving a DCI for sidelink, wherein the DCI comprises a resource pool index corresponding to one sidelink resource pool — 1024

Determining the DCI for scheduling sidelink data transmission or sidelink reference signal transmission based on at least the resource pool index or the one sidelink resource pool — 1026

Acquiring or determining fields or information in the DCI based on the determination that the DCI is for scheduling sidelink data transmission or sidelink reference signal transmission — 1028

Determining a sidelink resource based on the acquired or determined fields, or the information in the DCI — 1030

Performing a sidelink transmission on the sidelink resource in the one sidelink resource pool — 1032

**FIG. 10**

EP 4 351 258 A1

## Description

This disclosure generally relates to wireless communication networks and, more particularly, to a method and apparatus of downlink control information for scheduling sidelink reference signal in a wireless communication system in a wireless communication system.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the abovenoted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

## SUMMARY

Methods, systems, and apparatuses are provided for downlink control information for scheduling sidelink reference signal in a wireless communication system such that a UE can, for Downlink Control Information (DCI) from a network node, distinguish which kind of sidelink resources are scheduled without an impact on size increase and decoding complexity. In particular, a method and a device according to the invention are defined in the independent claims. The dependent claims define preferred embodiments thereof.

In various embodiments, a method of a first device in a wireless communication system comprises receiving configuration of one or more first sidelink resource pools for at least sidelink data transmission and configuration of one or more second sidelink resource pools for sidelink reference signal transmission, receiving a DCI for sidelink, wherein the DCI comprises a resource pool index corresponding to one sidelink resource pool, determining the DCI for scheduling sidelink data transmission or sidelink reference signal transmission based on at least the resource pool index or the one sidelink resource pool, acquiring or determining fields or information in the DCI based on the determination that the DCI is for scheduling sidelink data transmission or sidelink reference signal transmission, determining a sidelink resource based on the acquired or determined fields, or the information in the DCI, and performing a sidelink transmission on the sidelink resource in the one sidelink resource pool.

In various embodiments, a method of a network node in a wireless communication system comprises transmitting, to a first device, configuration of one or more first sidelink resource pools for at least sidelink data transmission and configuration of one or more second sidelink resource pools for sidelink reference signal transmission, determining a sidelink resource(s) associated with one sidelink resource type in one sidelink resource pool, generating a DCI for sidelink, wherein the DCI comprises a resource pool index corresponding to one sidelink resource pool and comprises (following) fields or information based on the one sidelink resource type, and transmitting the DCI to the first device.

The device according to the invention can be the first device or the network node.

## BRIEF DESCRIPTION OF THE DRAWINGS

FIG. 1 shows a diagram of a wireless communication system, in accordance with embodiments of the present invention.

FIG. 2 is a block diagram of a transmitter system (also known as access network) and a receiver system (also known as user equipment or UE), in accordance with embodiments of the present invention.

FIG. 3 is a functional block diagram of a communication system, in accordance with embodiments of the present invention.

FIG. 4 is a functional block diagram of the program code of FIG. 3, in accordance with embodiments of the present invention.

FIG. 5 is a reproduction of Figure 16: Diagram of resource allocation procedure in Scheme 1 from R1-2208453, "Discussion on SL positioning solutions", Huawei, HiSilicon.

FIG. 6A is an example diagram showing that when fully staggered SL-PRS pattern of M=N=4 is applied for SL PRS pattern, and when there are two SL PRS occasions within one slot, 8 SL PRSs may be multiplexed with different index 1~8, in accordance with embodiments of the present invention.

FIG. 6B is an example diagram showing that when partially staggered SL-PRS pattern of N=4, M=3/3/2 for three SL PRS occasions is applied for SL PRS pattern, 12 SL PRSs may be multiplexed with different index 1~12, in accordance with embodiments of the present invention.

FIG. 6C is an example diagram showing that when unstaggered SL-PRS pattern of N=4, M=4 is applied for SL PRS pattern, and when there are two SL PRS occasions within one slot, 8 SL PRSs may be multiplexed with different index 1~8, in accordance with embodiments of the present invention.

FIG. 7 is a table showing that the sidelink data transmission-related fields may be the PSSCH-related fields, and the sidelink reference signal-related fields may be the SL PRS-related fields, in accordance with embodiments of the present invention.

FIG. 8 is a flow diagram of a method for a first device in a wireless communication system comprises receiving a downlink control information for sidelink, interpreting/decoding/acquiring bits or fields in the downlink control information, determining sidelink resource(s), and performing sidelink transmission on the sidelink resource(s), in accordance with embodiments of the present invention.

FIG. 9 is a flow diagram of a method for a network node in a wireless communication system comprises determining sidelink resource(s), generating a downlink control information for sidelink, and transmitting the downlink control information to the first device, in accordance with embodiments of the present invention.

FIG. 10 is a flow diagram of a method for a first device in a wireless communication system comprises receiving configuration of one or more first sidelink resource pools, determining the DCI for scheduling sidelink data transmission or sidelink reference signal transmission, acquiring or determining fields or information in the DCI, determining a sidelink resource based on the acquired or determined fields, and performing a sidelink transmission on the sidelink resource in the one sidelink resource pool, in accordance with embodiments of the present invention.

FIG. 11 is a flow diagram of a method for a network node in a wireless communication system comprises transmitting, to a first device, configuration of one or more first sidelink resource pools for at least sidelink data transmission, determining a sidelink resource(s) associated with one sidelink resource type in one sidelink resource pool, generating a DCI for sidelink, and transmitting the DCI to the first device, in accordance with embodiments of the present invention.

## DETAILED DESCRIPTION

The invention described herein can be applied to or implemented in exemplary wireless communication systems and devices described below. In addition, the invention is described mainly in the context of the 3GPP architecture reference model. However, it is understood that with the disclosed information, one skilled in the art could easily adapt for use and implement aspects of the invention in a 3GPP2 network architecture as well as in other network architectures.

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A (Long Term Evolution Advanced) wireless access, 3GPP2 UMB (Ultra Mobile Broadband), WiMax, 3GPP NR (New Radio), or some other modulation techniques.

In particular, the exemplary wireless communication systems and devices described below may be designed to support one or more standards such as the standard offered by a consortium named "3rd Generation Partnership Project" referred to herein as 3GPP, including: [1] 3GPP TS 38.213 V17.2.0 (2022-06) 3GPP; TSG RAN; NR; Physical layer procedures for control (Release 17); [2] 3GPP TS 38.214 V17.1.0 (2022-03) 3GPP; TSG RAN; NR; Physical layer procedures for data (Release 17); [3] 3GPP TS 38.212 V17.1.0 (2022-03) 3GPP; TSGRAN; NR; Multiplexing and channel coding (Release 17); [4] 3GPP TS 38.211 V17.1.0 (2022-03) 3GPP; TSG RAN; NR; Physical channels and modulation (Release 17); [5] 3GPP TS 38.212 V17.1.0 (2022-03) 3GPP; TSG RAN; NR; Multiplexing and channel coding (Release 17); [6] RP-213588, "Revised SID on Study on expanded and improved NR positioning", Intel; [7] RAN1 Chair's Notes of 3GPP TSG RAN WG1 #109-e; [8] RAN1 Chair's Notes of 3GPP TSG RAN WG1 #110; [9] R1-2208453, "Discussion on SL positioning solutions", Huawei, HiSilicon; [10] R1-2208773, "Discussion on potential solutions for sidelink positioning", China Telecom; [11] R1-2209058, "Potential solutions for SL positioning", Intel Corporation; [12] R1-2209213, "Discussion on potential solutions for SL positioning", ZTE; and [13] R1-2209483, "Discussion on potential solutions for SL positioning", LG Electronics. The standards and documents listed above are hereby expressly and fully incorporated herein by reference in their entirety.

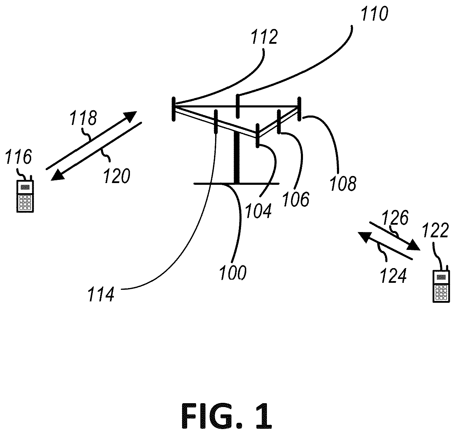

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal (AT) 116 is in communication with antennas 112 and 114, where antennas 112 and 114 transmit information to access terminal 116 over forward link 120 and receive information from AT 116 over reverse link 118. AT 122 is in communication with antennas 106 and 108, where antennas 106 and 108 transmit information to AT 122 over forward link 126 and receive information from AT 122 over reverse link 124. In a FDD system, communication links 118, 120, 124 and 126 may use different frequency for communication. For example, forward link 120 may use a different frequency than that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage normally causes less interference to access terminals in neighboring cells than an access network transmitting through a single antenna to all its access terminals.

The AN may be a fixed station or base station used for communicating with the terminals and may also be referred to as an access point, a Node B, a base station, an enhanced base station, an eNodeB, or some other terminology. The AT may also be called User Equipment (UE), a wireless communication device, terminal, access terminal or some other terminology.

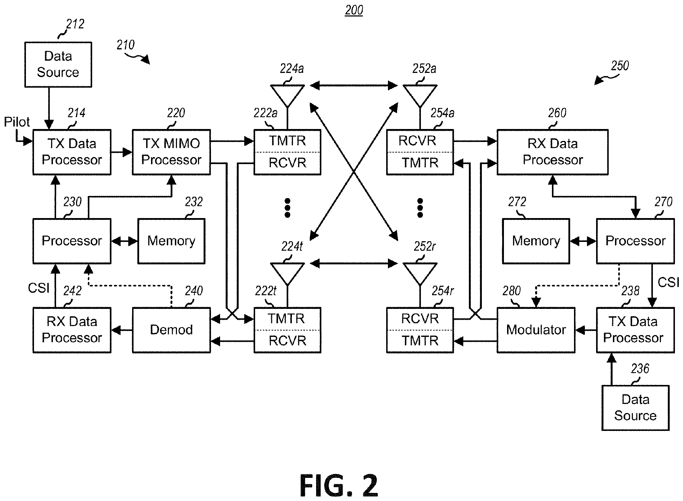

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (e.g., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230. A memory 232 is coupled to processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

Memory 232 may be used to temporarily store some buffered/computational data from 240 or 242 through Processor 230, store some buffed data from 212, or store some specific program codes. And Memory 272 may be used to temporarily store some buffered/computational data from 260 through Processor 270, store some buffed data from 236, or store some specific program codes.

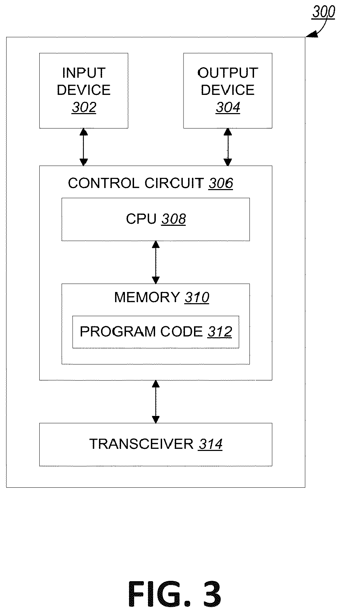

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the NR system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. In particular, the communication device 300 can be the first device or the network node as defined in the claims.

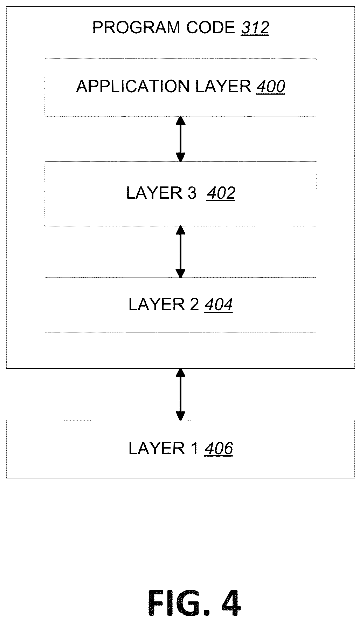

FIG. 4 is a simplified block diagram of the program code 312 shown in FIG. 3 in accordance with an embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE, LTE-A, or NR systems, the Layer 2 portion 404 may include a Radio Link Control (RLC) layer and a Medium Access Control (MAC) layer. The Layer 3 portion 402 may include a Radio Resource Control (RRC) layer.

Any two or more than two of the following paragraphs, (sub-)bullets, points, actions, or claims described in each invention paragraph or section may be combined logically, reasonably, and properly to form a specific method.

Any sentence, paragraph, (sub-)bullet, point, action, or claim described in each of the following invention paragraphs or sections may be implemented independently and separately to form a specific method or apparatus. Dependency, e.g., "based on", "more specifically", "example", etc., in the following invention disclosure is just one possible embodiment which would not restrict the specific method or apparatus.

In TS 38.213 ([1] 3GPP TS 38.213 V17.2.0 (2022-06) 3GPP; TSGRAN; NR; Physical layer procedures for control (Release 17)), the SL related procedure for control is specified.

******************************* QUOTATION [1] START *******************************

**10.2A PDCCH validation for SL configured grant Type 2**

A UE validates, for scheduling activation or scheduling release, a SL configured grant Type 2 PDCCH if

- the CRC of a corresponding DCI format 3_0 is scrambled with a SL-CS-RNTI provided by *sl-CS-RNTI,* and

- the new data indicator field in the DCI format 3_0 for the enabled transport block is set to '0'

Validation of the DCI format 3_0 is achieved if all fields for the DCI format 3_0 are set according to Table 10.2A-1 or Table 10.2A-2.

If validation is achieved, the UE considers the information in the DCI format 3_0 as a valid activation or valid release of SL configured grant Type 2. If validation is not achieved, the UE discards all the information in the DCI format 3_0.

**Table 10.2A-1: Special fields for SL configured grant Type 2 scheduling activation PDCCH validation**

|  | DCI format 3_0 |
|---|---|
| HARQ process number | set to all '0's |

**Table 10.2A-2: Special fields for SL configured grant Type 2 scheduling release PDCCH validation**

|  | DCI format 3_0 |
|---|---|
| HARQ process number | set to all '1's |
| Frequency resource assignment (if present) | set to all '1's |

**16 UE procedures for sidelink**

A UE is provided by *SL-BWP-Config* a BWP for SL transmissions (SL BWP) with numerology and resource grid determined as described in [4, TS 38.211]. For a resource pool within the SL BWP, the UE is provided by *sl-NumSubchannel* a number of sub-channels where each sub-channel includes a number of contiguous RBs provided by *sl-SubchannelSize.* The first RB of the first sub-channel in the SL BWP is indicated by *sl-StartRB-Sub-channel.* Available slots for a resource pool are provided by *sl-TimeResource* and occur with a periodicity of 10240 ms. For an available slot without S-SS/PSBCH blocks, SL transmissions can start from a first symbol indicated by *sl-StartSymbol* and be within a number of consecutive symbols indicated by *sl-LengthSymbols.* For an available slot with S-SS/PSBCH blocks, the first symbol and the number of consecutive symbols is predetermined.

**16.4 UE procedure for transmitting PSCCH**

A UE can be provided a number of symbols in a resource pool, by *sl-TimeResourcePSCCH,* starting from a second symbol that is available for SL transmissions in a slot, and a number of PRBs in the resource pool, by *sl-FreqResourcePSCCH,* starting from the lowest PRB of the lowest sub-channel of the associated PSSCH, for a PSCCH transmission with a SCI format 1-A.

A UE that transmits a PSCCH with SCI format 1-A using sidelink resource allocation mode 2 [6, TS 38.214] sets

- "Resource reservation period" as an index in *sl-ResourceReservePeriodList* corresponding to a reservation period provided by higher layers [11, TS 38.321], if the UE is provided *sl-MultiReserveResource*

- the values of the frequency resource assignment field and the time resource assignment field as described in [6, TS 38.214] to indicate N resources from a set $\{R_y\}$ of resources selected by higher layers as described in [11, TS 38.321] with $N$ smallest slot indices $y_i$ for $0 \le i \le N - 1$ such that $y_0 < y_1 < ... < y_{N-1} \le y_0 + 31$, where:

    - $N = \min(N_{selected}, N_{max\_reserve})$, where $N_{selected}$ is a number of resources in the set $\{R_y\}$ with slot indices $y_j$, $0 \le j \le N_{selected} - 1$, such that $y_0 < y_1 < ... < y_{N_{selected}-1} \le y_0 + 31$, and $N_{max\_reserve}$ is provided by *sl-MaxNumPerReserve*

    - each resource, from the set of $\{R_y\}$ resources, corresponds to $L_{subCH}$ contiguous sub-channels and a slot in a set of slots $\{t'^{SL}_y\}$, where $L_{subCH}$ is the number of sub-channels available for PSSCH/PSCCH transmission in a slot

$$\left(t'^{SL}_0, t'^{SL}_1, t'^{SL}_2, ...\right)$$

    - is a set of slots in a sidelink resource pool [6, TS 38.214]

    - $y_0$ is an index of a slot where the PSCCH with SCI format 1-A is transmitted.

A UE that transmits a PSCCH with SCI format 1-A using sidelink resource allocation mode 1 [6, TS 38.214] sets

- the values of the frequency resource assignment field and the time resource assignment field for the SCI format 1-A transmitted in the *m*-th resource for PSCCH/PSSCH transmission provided by a dynamic grant or by a SL configured grant, where *m* = {1,..., *M*} and M is the total number of resources for PSCCH/PSSCH transmission provided by a dynamic grant or the number of resources for PSCCH/PSSCH transmission in a period provided by a SL configured grant type 1 or SL configured grant type 2, as follows:
- the frequency resource assignment field and time resource assignment field indicate the *m*-th to *M*-th resources as described in [6, TS 38.214].

For decoding of a SCI format 1-A, a UE may assume that a number of bits provided by *sl-NumReservedBits* can have any value as described in [4, TS 38.212].
****************************** QUOTATION [1] END ******************************
In TS 38.214 ([2] 3GPP TS 38.214 V17.1.0 (2022-03) 3GPP; TSG RAN; NR; Physical layer procedures for data (Release 17)), the SL related procedure for data is specified.
****************************** QUOTATION [2] START ******************************

**8 Physical sidelink shared channel related procedures**

A UE can be configured by higher layers with one or more sidelink resource pools. A sidelink resource pool can be for transmission of PSSCH, as described in Clause 8.1, or for reception of PSSCH, as described in Clause 8.3 and can be associated with either sidelink resource allocation mode 1 or sidelink resource allocation mode 2.
In the frequency domain, a sidelink resource pool consists of *sl-NumSubchannel* contiguous sub-channels. A sub-channel consists of *sl-SubchannelSize* contiguous PRBs, where *sl-NumSubchannel* and *sl-SubchannelSize* are higher layer parameters.

The set of slots that may belong to a sidelink resource pool is denoted by ( $t_0^{SL}, t_1^{SL}, \cdots, t_{Tmax-1}^{SL}$ ) where

- $0 \le t_i^{SL} < 10240 \times 2^\mu$ , $0 \le i < T_{max}$,

- The slots in the set are arranged in increasing order of slot index.

The UE determines the set of slots assigned to a sidelink resource pool as follows:

- a bitmap ($b_0$, $b_1$, ... , $b_{L_{bitmap}-1}$) associated with the resource pool is used where $L_{bitmap}$ the length of the bitmap is configured by higher layers.

- a slot $t_k^{SL} (0 \le k < 10240 \times 2^\mu - N_{S-SSB} - N_{nonSL} - N_{reserved})$ belongs to the set if $b_{k'}$ = 1 where *k'* = *k mod* $L_{bitmap}$.

- The slots in the set are re-indexed such that the subscripts *i* of the remaining slots $t'^{SL}_i$ are successive {0, 1, ..., $T'_{max}$ - 1} where $T'_{max}$ is the number of the slots remaining in the set.

The UE determines the set of resource blocks assigned to a sidelink resource pool as follows:

- The resource block pool consists of $N_{PRB}$ PRBs.
- The sub-channel *m* for *m* = 0,1, ..., *numSubchannel* - 1 consists of a set of $n_{subCHsize}$ contiguous resource blocks with the physical resource block number $n_{PRB} = n_{subCHRBstart} + m \cdot n_{subCHsize} + j$ for *j* = 0,1,···, $n_{subCHsize}$ - 1, where $n_{subCHRBstart}$ and $n_{subCHsize}$ are given by higher layer parameters *sl-StartRB-Subchannel* and *sl-SubchannelSize,* respectively

**8.1 UE procedure for transmitting the physical sidelink shared channel**

Each PSSCH transmission is associated with an PSCCH transmission.
That PSCCH transmission carries the 1st stage of the SCI associated with the PSSCH transmission; the 2nd stage of the associated SCI is carried within the resource of the PSSCH.
If the UE transmits SCI format 1-A on PSCCH according to a PSCCH resource configuration in slot *n* and PSCCH resource *m*, then for the associated PSSCH transmission in the same slot

- one transport block is transmitted with up to two layers;

- The number of layers (υ) is determined according to the *'Number of DMRSport'* field in the SCI;

- The set of consecutive symbols within the slot for transmission of the PSSCH is determined according to clause 8.1.2.1;

- The set of contiguous resource blocks for transmission of the PSSCH is determined according to clause 8.1.2.2;

### 8.1.1 Transmission schemes

Only one transmission scheme is defined for the PSSCH and is used for all PSSCH transmissions.

PSSCH transmission is performed with up to two antenna ports, with antenna ports 1000-1001 as defined in clause 8.2.4 of [4, TS 38.211].

### 8.1.2 Resource allocation

In sidelink resource allocation mode 1:

- for PSSCH and PSCCH transmission, dynamic grant, configured grant type 1 and configured grant type 2 are supported. The configured grant Type 2 sidelink transmission is semi-persistently scheduled by a SL grant in a valid activation DCI according to Clause 10.2A of [6, TS 38.213].

8.1.2.1 Resource allocation in time domain

The UE shall transmit the PSSCH in the same slot as the associated PSCCH.

The minimum resource allocation unit in the time domain is a slot.

The UE shall transmit the PSSCH in consecutive symbols within the slot, subject to the following restrictions:

- The UE shall not transmit PSSCH in symbols which are not configured for sidelink. A symbol is configured for sidelink, according to higher layer parameters *sl-StartSymbol* and *sl-LengthSymbols,* where *sl-StartSymbol* is the symbol index of the first symbol of *sl-LengthSymbols* consecutive symbols configured for sidelink.

- Within the slot, PSSCH resource allocation starts at symbol *sl-StartSymbol+1.*

- The UE shall not transmit PSSCH in symbols which are configured for use by PSFCH, if PSFCH is configured in this slot.

- The UE shall not transmit PSSCH in the last symbol configured for sidelink.

- The UE shall not transmit PSSCH in the symbol immediately preceding the symbols which are configured for use by PSFCH, if PSFCH is configured in this slot.

In sidelink resource allocation mode 1:

- For sidelink dynamic grant, the PSSCH transmission is scheduled by a DCI format 3_0.

- For sidelink configured grant type 2, the configured grant is activated by a DCI format 3_0.

- For sidelink dynamic grant and sidelink configured grant type 2:

  - The "Time gap" field value $m$ of the DCI format 3_0 provides an index $m + 1$ into a slot offset table. That table is given by higher layer parameter *sl-DCI-ToSL-Trans* and the table value at index $m + 1$ will be referred to as slot offset $K_{SL}$.

  - The slot of the first sidelink transmission scheduled by the DCI is the first SL slot of the corresponding resource pool that starts not earlier than $T_{DL} - \frac{T_{TA}}{2} + K_{SL} \times T_{slot}$ , where $T_{DL}$ is the starting time of the downlink slot carrying the corresponding DCI, $T_{TA}$ is the timing advance value corresponding to the TAG of the serving cell on which the DCI is received and $K_{SL}$ is the slot offset between the slot of the DCI and the first sidelink transmission scheduled by DCI and $T_{slot}$ is the SL slot duration.

  - The "Configuration index" field of the DCI format 3_0, if provided and not reserved, indicates the index of the sidelink configured type 2.

- For sidelink configured grant type 1:

  - The slot of the first sidelink transmissions follows the higher layer configuration according to [10, TS 38.321].

8.1.2.2 Resource allocation in frequency domain

The resource allocation unit in the frequency domain is the sub-channel.

The sub-channel assignment for sidelink transmission is determined using the "Frequency resource assignment" field in the associated SCI.

The lowest sub-channel for sidelink transmission is the sub-channel on which the lowest PRB of the associated PSCCH is transmitted.

If a PSSCH scheduled by a PSCCH would overlap with resources containing the PSCCH, the resources corresponding to a union of the PSCCH that scheduled the PSSCH and associated PSCCH DM-RS are not available for the PSSCH.

**8.1.5 UE procedure for determining slots and resource blocks for PSSCH transmission associated with an SCI format 1-A**

The set of slots and resource blocks for PSSCH transmission is determined by the resource used for the PSCCH transmission containing the associated SCI format 1-A, and fields *'Frequency resource assignment'*, *'Time resource assignment'* of the associated SCI format 1-A as described below.

*'Time resource assignment'* carries logical slot offset indication of N = 1 or 2 actual resources when *sl-MaxNumPerReserve* is 2, and N = 1 or 2 or 3 actual resources when *sl-MaxNumPerReserve* is 3, in a form of time RIV (TRIV) field which is determined as follows:

$$\text{if } N = 1$$

$$TRIV = 0$$

$$\text{elseif } N = 2$$

$$TRIV = t_1$$

$$\text{else}$$

$$\text{if } (t_2 - t_1 - 1) \le 15$$

$$TRIV = 30(t_2 - t_1 - 1) + t_1 + 31$$

$$\text{else}$$

$$TRIV = 30(31 - t_2 + t_1) + 62 - t_1$$

$$\text{end if}$$

$$\text{end if}$$

where the first resource is in the slot where SCI format 1-A was received, and $t_i$ denotes i-th resource time offset in logical slots of a resource pool with respect to the first resource where for N = 2, $1 \le t_1 \le 31$; and for N = 3, $1 \le t_1 \le 30$, $t_1 < t_2 \le 31$.

The starting sub-channel $n_{subCH,0}^{start}$ of the first resource is determined according to clause 8.1.2.2. The number of contiguously allocated sub-channels for each of the N resources $L_{subCH} \geq 1$ and the starting sub-channel indexes of resources indicated by the received SCI format 1-A, except the resource in the slot where SCI format 1-A was received, are determined from "Frequency resource assignment" which is equal to a frequency RIV (FRIV) where.

If *sl-MaxNumPerReserve* is 2 then

$$FRIV = n_{subCH,1}^{start} + \sum_{i=1}^{L_{subCH}-1}\left(N_{subchannel}^{SL} + 1 - i\right)$$

If *sl-MaxNumPerReserve* is 3 then

$$FRIV = n_{subCH,1}^{start} + n_{subCH,2}^{start} \cdot \left(N_{subchannel}^{SL} + 1 - L_{subCH}\right) + \sum_{i=1}^{L_{subCH}-1}\left(N_{subchannel}^{SL} + 1 - i\right)^2$$

where

- $n_{subCH,1}^{start}$ denotes the starting sub-channel index for the second resource
- $n_{subCH,2}^{start}$ denotes the starting sub-channel index for the third resource
- $N_{subchannel}^{SL}$ is the number of sub-channels in a resource pool provided according to the higher layer parameter *sl-NumSubchannel*

If TRIV indicates *N < sl-MaxNumPerReserve,* the starting sub-channel indexes corresponding to *sl-MaxNumPer-Reserve* minus N last resources are not used.

**8.2 UE procedure for transmitting sidelink reference signals**

**8.2.1 CSI-RS transmission procedure**

A UE transmits sidelink CSI-RS within a unicast PSSCH transmission if the following conditions hold:

- CSI reporting is enabled by higher layer parameter *sl-CSI-Acquisition;* and

- the *'CSI request'* field in the corresponding SCI format 2-A is set to 1.

The following parameters for CSI-RS transmission are configured for each CSI-RS configuration:

- *sl-CSI-RS-FirstSymbol* indicates the first OFDM symbol in a PRB used for SL CSI-RS

- *sl-CSI-RS-FreqAllocation* indicates the number of antenna ports and the frequency domain allocation for SL CSI-RS.

8.3 UE procedure for receiving the physical sidelink shared channel

For sidelink resource allocation mode 1, a UE upon detection of SCI format 1-A on PSCCH can decode PSSCH according to the detected SCI formats 2-A and 2-B, and associated PSSCH resource configuration configured by higher layers. The UE is not required to decode more than one PSCCH at each PSCCH resource candidate.
For sidelink resource allocation mode 2, a UE upon detection of SCI format 1-A on PSCCH can decode PSSCH according to the detected SCI formats 2-A and 2-B, and associated PSSCH resource configuration configured by higher layers. The UE is not required to decode more than one PSCCH at each PSCCH resource candidate.
A UE is required to decode neither the corresponding SCI formats 2-A and 2-B nor the PSSCH associated with an SCI format 1-A if the SCI format 1-A indicates an MCS table that the UE does not support.
****************************** QUOTATION [2] END ******************************
In TS 38.212 ([3] 3GPP TS 38.212 V17.1.0 (2022-03) 3GPP; TSG RAN; NR; Multiplexing and channel coding (Release 17)), DCI format/SL grant and SCI format for sidelink are specified.
****************************** QUOTATION [5] START ******************************

7.3.1.4 DCI formats for scheduling of sidelink

7.3.1.4.1 Format 3_0

DCI format 3_0 is used for scheduling of NR PSCCH and NR PSSCH in one cell.
The following information is transmitted by means of the DCI format 3_0 with CRC scrambled by SL-RNTI or SL-CS-RNTI:

- Resource pool index $\lceil \log_2 I \rceil$ bits, where 1 is the number of resource pools for transmission configured by the higher layer parameter *sl-TxPoolScheduling.*

- Time gap - 3 bits determined by higher layer parameter *sl-DCI-ToSL-Trans,* as defined in clause 8.1.2.1 of [6, TS 38.214]

- HARQ process number - 4 bits.

- New data indicator - 1 bit.

- Lowest index of the subchannel allocation to the initial transmission $-\lceil \log_2(N_{\text{subChannel}}^{\text{SL}}) \rceil$ bits as defined in clause 8.1.2.2 of [6, TS 38.214]

- SCI format 1-A fields according to clause 8.3.1.1:

  - Frequency resource assignment.

  - Time resource assignment.

- PSFCH-to-HARQ feedback timing indicator $-\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]

- PUCCH resource indicator - 3 bits as defined in clause 16.5 of [5, TS 38.213].

- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.

- Counter sidelink assignment index - 2 bits

  - 2 bits as defined in clause 16.5.2 of [5, TS 38.213] if the UE is configured with *pdsch-HARQ-ACK-Codebook = dynamic*

  - 2 bits as defined in clause 16.5.1 of [5, TS 38.213] if the UE is configured with *pdsch-HARQ-ACK-Codebook = semi-static*

- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.
If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

**8.3 Sidelink control information on PSCCH**

SCI carried on PSCCH is a 1st-stage SCI, which transports sidelink scheduling information.

**8.3.1 1st-stage SCI formats**

The fields defined in each of the 1st-stage SCI formats below are mapped to the information bits $a_0$ to $a_{A-1}$ as follows:
Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$.

**8.3.1.1 SCI format 1-A**

SCI format 1-A is used for the scheduling of PSSCH and 2nd-stage-SCI on PSSCH
The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment $\left\lceil \log_2 \left( \frac{N_{\text{subChannel}}^{\text{SL}} \left( N_{\text{subChannel}}^{\text{SL}} + 1 \right)}{2} \right) \right\rceil$ when the value of the higher layer parameter *sl-MaxNumPerRESERVE* is configured to 2; otherwise $\left\lceil \log_2 \left( \frac{N_{\text{subChannel}}^{\text{SL}} \left( N_{\text{subChannel}}^{\text{SL}} + 1 \right) \left( 2 N_{\text{subChannel}}^{\text{SL}} + 1 \right)}{6} \right) \right\rceil$ bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period $\left\lceil \log_2 N_{\text{rsv\_period}} \right\rceil$ bits as defined in clause 16.4 of [5, TS 38.213], where $N_{\text{rsv\_period}}$ is the number of entries in the higher layer parameter *sl-ResourceReservePeriodList,* if higher layer parameter *sl-MultiReserveResource* is configured; 0 bit otherwise.

- DMRS pattern - $\left\lceil \log_2 N_{\text{pattern}} \right\rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList.*

- 2nd-stage SCI format - 2 bits as defined in Table 8.3.1.1-1.

- Beta_offset indicator - 2 bits as provided by higher layer parameter *sl-BetaOffsets2ndSCI* and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

- Additional MCS table indicator - as defined in clause 8.1.3.1 of [6, TS 38.214]: 1 bit if one MCS table is configured by higher layer parameter *sl-Additional-MCS-Table;* 2 bits if two MCS tables are configured by higher layer parameter *sl-Additional-MCS-Table;* 0 bit otherwise.

- PSFCH overhead indication - 1 bit as defined clause 8.1.3.2 of [6, TS 38.214] if higher layer parameter *sl-PSFCH-Period* = 2 or 4; 0 bit otherwise.

- Reserved - a number of bits as determined by the following:

- $N_{reserved}$ bits as configured by higher layer parameter *sl-NumReservedBits,* with value set to zero, if higher layer parameter *indicationUEBScheme2* is not configured, or if higher layer parameter *indicationUEBScheme2* is configured to 'Disabled';

  - ($N_{reserved}$ - 1) bits otherwise, with value set to zero.

- Conflict information receiver flag - 0 or 1 bit

  - 1 bit if higher layer parameter *indication UEBScheme2* is configured to 'Enabled', where the bit value of 0 indicates that the UE cannot be a UE to receive conflict information and the bit value of 1 indicates that the UE can be a UE to receive conflict information as defined in Clause 16.3.0 of [5, TS 38.213];

  - 0 bit otherwise.

## 8.4 Sidelink control information on PSSCH

SCI carried on PSSCH is a 2nd-stage SCI, which transports sidelink scheduling information, and/or inter-UE coordination related information.

8.4.1 2nd-stage SCI formats

8.4.1.1 SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits.

- New data indicator - 1 bit.

- Redundancy version - 2 bits as defined in Table 7.3.1.1.1-2.

- Source ID - 8 bits as defined in clause 8.1 of [6, TS 38.214].

- Destination ID - 16 bits as defined in clause 8.1 of [6, TS 38.214].

- HARQ feedback enabled/disabled indicator - 1 bit as defined in clause 16.3 of [5, TS 38.213].

- Cast type indicator - 2 bits as defined in Table 8.4.1.1-1 and in clause 8.1 of [6, TS 38.214].

- CSIrequest - 1 bit as defined in clause 8.2.1 of [6, TS 38.214] and in clause 8.1 of [6, TS 38.214].

**Table 8.4.1.1-1: Cast type indicator**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

8.4.1.2 SCI format 2-B

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits.

- New data indicator - 1 bit.

- Redundancy version - 2 bits as defined in Table 7.3.1.1.1-2.

- Source ID - 8 bits as defined in clause 8.1 of [6, TS 38.214].

- Destination ID - 16 bits as defined in clause 8.1 of [6, TS 38.214].

- HARQ feedback enabled/disabled indicator - 1 bit as defined in clause 16.3 of [5, TS 38.213].

- Zone ID - 12 bits as defined in clause 5.8.11 of [9, TS 38.331].

- Communication range requirement - 4 bits determined by higher layer parameter *sl-ZoneConfigMCR-Index*.

8.4.1.3 SCI format 2-C

SCI format 2-C is used for the decoding of PSSCH, and providing inter-UE coordination information or requesting inter-UE coordination information.

The following information is transmitted by means of the SCI format 2-C:

- HARQ process number - 4 bits

- New data indicator - 1 bit

- Redundancy version - 2 bits as defined in Table 7.3.1.1.1-2

- Source ID - 8 bits as defined in clause 8.1 of [6, TS 38.214]

- Destination ID - 16 bits as defined in clause 8.1 of [6, TS 38.214]

- HARQ feedback enabled/disabled indicator - 1 bit as defined in clause 16.3 of [5, TS 38.213]

- CSIrequest - 1 bit as defined in clause 8.2.1 of [6, TS 38.214] and in clause 8.1 of [6, TS 38.214]

- Providing/Requesting indicator - 1 bit, where value 0 indicates SCI format 2-C is used for providing inter-UE coordination information and value 1 indicates SCI format 2-C is used for requesting inter-UE coordination information

- Padding bits.

For operation in a same resource pool, zeros shall be appended to SCI format 2-C of which 'Providing/Requesting indicator' field is set to 1 until the payload size equals that of SCI format 2-C of which 'Providing/Requesting indicator' field is set to 0.

8.4.5 Multiplexing of coded 2nd-stage SCI bits to PSSCH

The coded 2nd-stage SCI bits are multiplexed onto PSSCH according to the procedures in Clause 8.2.1.
****************************** QUOTATION [3] END ******************************
In TS 38.211 ([4] 3GPP TS 38.211 V17.1.0 (2022-03) 3GPP; TSG RAN; NR; Physical channels and modulation (Release 17)) for NR, sidelink reference signals and sidelink channels are specified. Downlink positioning reference signal and uplink sounding reference signal for positioning in Uu interface are also specified.
****************************** QUOTATION [4] START ******************************

6.4.1.4 Sounding reference signal

6.4.1.4.1 SRS resource

An SRS resource is configured by the *SRS Resource* IE or the *SRS-PosResource* IE and consists of

- $N_{\mathrm{ap}}^{\mathrm{SRS}} \in \{1,2,4\}$ antenna ports $\{p_i\}_{i=0}^{N_{\mathrm{ap}}^{\mathrm{SRS}}-1}$, where the number of antenna ports is given by the higher layer parameter *nrofSRS-Ports* if configured, otherwise $N_{\mathrm{ap}}^{\mathrm{SRS}} = 1$, and $p_i$ = 1000 + $i$ when the SRS resource is in a SRS resource set with higher-layer parameter *usage* in *SRS ResourceSet* not set to 'nonCodebook', or determined according to [6, TS 38.214] when the SRS resource is in a SRS resource set with higher-layer parameter *usage* in *SRS-ResourceSet* set to 'nonCodebook'

- $N_{\mathrm{symb}}^{\mathrm{SRS}} \in \{1,2,4,8,10,12,14\}$ consecutive OFDM symbols given by the field *nrofSymbols* contained in the higher layer parameter *resourceMapping*

- $l_0$, the starting position in the time domain given by $l_0 = N_{\mathrm{symb}}^{\mathrm{slot}} - 1 - l_{\mathrm{offset}}$ where the offset $l_{\mathrm{offset}} \in \{0,1, \dots ,13\}$ counts symbols backwards from the end of the slot and is given by the field *startPosition* contained in the higher layer parameter *resourceMapping* and $l_{\mathrm{offset}} \geq N_{\mathrm{symb}}^{\mathrm{SRS}} - 1$

- $k_0$, the frequency-domain starting position of the sounding reference signal

7.4.1.7 Positioning reference signals

7.4.1.7.1 General

A positioning frequency layer consists of one or more downlink PRS resource sets, each of which consists of one or more downlink PRS resources as described in [6, TS 38.214].

7.4.1.7.2 Sequence generation

The UE shall assume the reference-signal sequence r(m) is defined by

$$r(m) = \frac{1}{\sqrt{2}}\left(1 - 2c(2m)\right) + j\frac{1}{\sqrt{2}}\left(1 - 2c(2m + 1)\right)$$

where the pseudo-random sequence $c(i)$ is defined in clause 5.2.1. The pseudo-random sequence generator shall be initialised with

$$c_{\mathrm{init}} = \left(2^{22}\left\lfloor\frac{n_{\mathrm{ID,seq}}^{\mathrm{PRS}}}{1024}\right\rfloor + 2^{10}\left(N_{\mathrm{symb}}^{\mathrm{slot}}n_{\mathrm{s,f}}^{\mu} + l + 1\right)\left(2\left(n_{\mathrm{ID,seq}}^{\mathrm{PRS}} \bmod 1024\right) + 1\right) + \left(n_{\mathrm{ID,seq}}^{\mathrm{PRS}} \bmod 1024\right)\right) \bmod 2^{31}$$

where $n_{\mathrm{s,f}}^{\mu}$ is the slot number, the downlink PRS sequence ID $n_{\mathrm{ID,seq}}^{\mathrm{PRS}} \in \{0,1, \dots ,4095\}$ is given by the higher-layer parameter *dl-PRS-SequenceID,* and *l* is the OFDM symbol within the slot to which the sequence is mapped.

7.4.1.7.3 Mapping to physical resources in a downlink PRS resource

For each downlink PRS resource configured, the UE shall assume the sequence r(m) is scaled with a factor $\beta_{\mathrm{PRS}}$ and mapped to resources elements $(k, l)_{p,\mu}$ according to

$$a_{k,l}^{(p,\mu)} = \beta_{\text{PRS}}\, r(m)$$

$$m = 0, 1, \dots$$

$$k = mK_{\text{comb}}^{\text{PRS}} + \left( \left( k_{\text{offset}}^{\text{PRS}} + k' \right) \bmod K_{\text{comb}}^{\text{PRS}} \right)$$

$$l = l_{\text{start}}^{\text{PRS}}, l_{\text{start}}^{\text{PRS}} + 1, \dots, l_{\text{start}}^{\text{PRS}} + L_{\text{PRS}} - 1$$

when the following conditions are fulfilled:

- the resource element $(k, l)_{p,\mu}$ is within the resource blocks occupied by the downlink PRS resource for which the UE is configured;
- the symbol $l$ is not used by any SS/PBCH block used by a serving cell for downlink PRS transmitted from the same serving cell or any SS/PBCH block from a non-serving cell whose time frequency location is provided to the UE by higher layers for downlink PRS transmitted from the same non-serving cell;
- the slot number satisfies the conditions in clause 7.4.1.7.4.

and where

- the antenna port $p = 5000$
- $l_{\text{start}}^{\text{PRS}}$ is the first symbol of the downlink PRS within a slot and given by the higher-layer parameter *dl-PRS-ResourceSymbolOffset;*
- the size of the downlink PRS resource in the time domain $L_{\text{PRS}} \in \{2,4,6,12\}$ is given by the higher-layer parameter *dl-PRS-NumSymbols;*
- the comb size $K_{\text{comb}}^{\text{PRS}} \in \{2, 4, 6, 12\}$ is given by the higher-layer parameter *dl-PRS-CombSizeN-AndReOffset* for a downlink PRS resource configured for RTT-based propagation delay compensation, otherwise by the higher-layer parameter *dl-PRS-CombSizeN* such that the combination $\left\{ L_{\text{PRS}}, K_{\text{comb}}^{\text{PRS}} \right\}$ is one of {2, 2},{4, 2}, {6, 2}, {12, 2}, {4, 4}, {12, 4}, {6, 6}, {12, 6} and {12, 12};
- the resource-element offset $k_{\text{offset}}^{\text{PRS}} \in \left\{ 0, 1, \dots, K_{\text{comb}}^{\text{PRS}} - 1 \right\}$ is obtained from the higher-layer parameter *dl-PRS-CombSizeN-AndReOffiet;*
- the quantity $k'$ is given by Table 7.4.1.7.3-1.

If the downlink PRS resource is configured for RTT based propagation delay compensation as described in clause 9 of [6, TS 38.214], the reference point for $k = 0$ is subcarrier 0 in common resource block 0; Otherwise, the reference point for $k = 0$ is the location of the point A of the positioning frequency layer, in which the downlink PRS resource is configured where point A is given by the higher-layer parameter *dl-PRS-PointA.*

Table 7.4.1.7.3-1:

| $K_{\text{comb}}^{\text{PRS}}$ | The frequency offset $k'$ as a function of $l - l_{\text{start}}^{\text{PRS}}$. | | | | | | | | | | | |
|---|---|---|---|---|---|---|---|---|---|---|---|---|
| | Symbol number within the downlink PRS resource $l - l_{\text{start}}^{\text{PRS}}$ | | | | | | | | | | | |
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

7.4.1.7.4 Mapping to slots in a downlink PRS resource set

For a downlink PRS resource in a downlink PRS resource set, the UE shall assume the downlink PRS resource being transmitted when the slot and frame numbers fulfil

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod T_{\text{per}}^{\text{PRS}} \in \left\{ i T_{\text{gap}}^{\text{PRS}} \right\}_{i=0}^{T_{\text{rep}}^{\text{PRS}}-1}$$

and one of the following conditions are fulfilled:

- the higher-layer parameters *dl-PRS-MutingOption1* and *dl-PRS-MutingOption2* are not provided;
- the higher-layer parameter *dl-PRS-MutingOption1* is provided with bitmap {$b^1$} but *dl-PRS-MutingOption2* with bitmap {$b^2$} is not provided, and bit $b_i^1$ is set;
- the higher-layer parameter *dl-PRS-MutingOption2* is provided with bitmap {$b^2$} but *dl-PRS MutingOptionI* with bitmap {$b^1$} is not provided, and bit $b_i^2$ is set;
- the higher-layer parameters *dl-PRS-MutingOption1* with bitmap {$b^1$} and *dl-PRS-MutingOption2* with {$b^2$} are both provided, and both bit $b_i^1$ and $b_i^2$ are set.

where

- $b_i^1$ is bit $i = \left\lfloor \left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) / \left(T_{\text{muting}}^{\text{PRS}} T_{\text{per}}^{\text{PRS}}\right) \right\rfloor \bmod L$ in the bitmap given by the higher-layer parameter where $L \in \{2, 4, 6, 8, 16, 32\}$ is the size of the bitmap;

- $b_i^2$ is bit $i = \left\lfloor \left( \left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod T_{\text{per}}^{\text{PRS}} \right) / T_{\text{gap}}^{\text{PRS}} \right\rfloor \bmod T_{\text{rep}}^{\text{PRS}}$ in the bitmap given by the higher-layer parameter *dl-PRS MutingOption2*;

- the periodicity $T_{\text{per}}^{\text{PRS}} \in 2^{\mu}\{4, 5, 8, 10, 16, 20, 32, 40, 64, 80, 160, 320, 640, 1280, 2560, 5120, 10240\}$ and the slot offset $T_{\text{offset}}^{\text{PRS}} \in \{0, 1, \ldots, T_{\text{per}}^{\text{PRS}} - 1\}$ are given by the higher-layer parameter *dl-PRS-Periodicity-and-Resource-SetSlotOffset;*

- the downlink PRS resource slot offset $T_{\text{offset,res}}^{\text{PRS}}$ is given by the higher-layer parameter *dl-PRS-ResourceSlotOffset;*

- the repetition factor $T_{\text{rep}}^{\text{PRS}} \in \{1,2,4,6,8,16,32\}$ is given by the higher-layer parameter *dl-PRS-ResourceRepetition-Factor,*

- the muting repetition factor $T_{\text{muting}}^{\text{PRS}}$ is given by the higher-layer parameter *dl-PRS-MutingBitRepetitionFactor;*

- the time gap $T_{\text{gap}}^{\text{PRS}} \in \{1,2,4,8,16,32\}$ is given by the higher-layer parameter *dl-PRS-ResourceTimeGap;*

For a downlink PRS resource in a downlink PRS resource set configured for RTT-based propagation delay compensation, the UE shall assume the downlink PRS resource being transmitted as described in clause 9 of [6, TS 38.214]; otherwise, the UE shall assume the downlink PRS resource being transmitted as described in clause 5.1.6.5 of [6, TS 38.214].
****************************** QUOTATION [4] END ******************************

In [6] (RP-213588, "Revised SID on Study on expanded and improved NR positioning", Intel), SID Study on expanded and improved NR positioning is introduced.
****************************** QUOTATION [6] START ******************************

## 3 Justification

In Release 17, 3GPP RAN conducted studies on "NR Positioning Enhancements" and "Scenarios and requirements of in-coverage, partial coverage, and out-of-coverage NR positioning use cases".

The study on "Scenarios and requirements of in-coverage, partial coverage, and out-of-coverage NR positioning use cases" focussed on V2X and public safety use cases with the outcome being captured in TR38.845. Additionally, SA1 has developed requirements in TS22.261 for "Ranging based services", and has developed positioning accuracy requirements in TS22.104 for IIoT uses cases in out-of-coverage scenarios. There is a need for 3GPP to study and develop sidelink positioning solutions that can support the use cases, scenarios and requirements identified during these activities.

The study on "NR Positioning Enhancements" investigated higher accuracy, and lower latency location, high integrity and reliability requirements resulting from new applications and industry verticals for 5G. Some of the enhancements identified during that work have been specified during the Rel-17 Work Item on "NR Positioning Enhancements", but there remain a number of opportunities for enhancement that have not yet been incorporated into the specifications.

## 4 Objective

### 4.1 Objective of SI or Core part WI or Testing part WI

- Study solutions for sidelink positioning considering the following: [RAN1, RAN2]

  - Scenario/requirements

    ◦ Coverage scenarios to cover: in-coverage, partial-coverage and out-of-coverage

    ◦ Requirements: Based on requirements identified in TR38.845 and TS22.261 and TS22.104

    ◦ Use cases: V2X (TR38.845), public safety (TR38.845), commercial (TS22.261), IIOT (TS22.104)

    ◦ Spectrum: ITS, licensed

  - Identify specific target performance requirements to be considered for the evaluation based on existing 3GPP work and inputs from industry forums [RAN1]

  - Define evaluation methodology with which to evaluate SL positioning for the uses cases and coverage scenarios, reusing existing methodologies from sidelink communication and from positioning as much as possible [RAN1].

  - Study and evaluate performance and feasibility of potential solutions for SL positioning, considering relative positioning, ranging and absolute positioning: [RAN1, RAN2]

    ◦ Evaluate bandwidth requirement needed to meet the identified accuracy requirements [RAN1]

    ◦ Study of positioning methods (e.g. TDOA, RTT, AOA/D, etc) including combination of SL positioning measurements with other RAT dependent positioning measurements (e.g. Uu based measurements) [RAN1]

    ◦ Study of sidelink reference signals for positioning purposes from physical layer perspective, including signal design, resource allocation, measurements, associated procedures, etc, reusing existing reference signals, procedures, etc from sidelink communication and from positioning as much as possible [RAN1]

    ◦ Study of positioning architecture and signalling procedures (e.g. configuration, measurement reporting, etc) to enable sidelink positioning covering both UE based and network based positioning [RAN2, including coordination and alignment with RAN3 and SA2 as required]

****************************** QUOTATION [6] END ******************************

In RAN1 #109-e ([7] RAN1 Chair's Notes of 3GPP TSG RAN WG1 #109-e), there are some agreements on sidelink positioning.

****************************** QUOTATION [7] START ******************************

**Agreement**

For evaluations for SL positioning:

- For V2X and public safety use-cases, at least in-coverage and out-of-coverage scenarios are considered.
- For IIoT and commercial use-cases, at least in-coverage scenarios are considered.

**Agreement**

With regards to the numerologies of the SL-PRS, limit the study to those supported for NR Sidelink.

- Note 1: NR Sidelink supports {15, 30, 60 kHz} in FR1 and {60, 120 kHz} in FR2
- Note 2: This doesn't imply that SL-PRS FR2-specific optimization(s) are expected to be studied

**Agreement**

With regards to the configuration/activation/deactivation/triggering of SL-PRS, study the following options:

- Option 1: High-layer-only signaling involvement in the SL-PRS configuration

  ○ No Lower layer involvement, e.g., SL-MAC-CE or SCI or DCI, for the activation or the triggering of a SL-PRS.
  ○ Based on the study, this option may correspond to

    - A SL-PRS configuration that is a single-shot or multiple shots
    - A high-layer configuration that may be received from an LMF, a gNB, or a UE

- Option 2: High-layer and lower-layer signaling involvement in the SL-PRS configuration

  ○ Lower-layer may correspond to SL-MAC-CE, or SCI, or DCI
  ○ For example, high layer signaling can may be used for SL-PRS configuration and lower layer signaling can may be used for initiating SL positioning and/or configuration/triggering/activating/deactivating/indicating and potential resource indication/reservation transmission of SL-PRS.

- Option 3: Only lower-layer signaling involvement in the SL-PRS configuration
  ○ Lower-layer may correspond to SL-MAC-CE, or SCI, or DCI
- Note 1: Include aspects in the study related to flexibility, overhead, latency, and reliability as/if needed.

**Agreement**

For the purpose of RAN1 discussion during this study item, at least the following terminology is used:

- **Target UE:** UE to be positioned (in this context, using SL, i.e. PC5 interface).
- **Sidelink positioning:** Positioning UE using reference signals transmitted over SL, i.e., PC5 interface, to obtain absolute position, relative position, or ranging information.
- **Ranging:** determination of the distance and/or the direction between a UE and another entity, e.g., anchor UE.
- **Sidelink positioning reference signal (SL PRS):** reference signal transmitted over SL for positioning purposes.
- **SL PRS (pre-)configuration:** (pre-)configured parameters of SL PRS such as time-frequency resources (other parameters are not precluded) including its bandwidth and periodicity.
- Continue discussion on additional terminology clarification(s) such as: Initiator UE, Responder UE, Sidelink Positioning group, reference UE, etc, including whether such terminology is needed within RAN1 discussion.

**Agreement**

For the purpose of RAN1 discussion during this study item, at least the following terminology is used:

■ **Anchor UE:** UE supporting positioning of target UE, e.g., by transmitting and/or receiving reference signals for positioning, providing positioning-related information, etc., over the SL interface.

  ◦ FFS: clarification of the knowledge of the location of the anchor UE

**Agreement**

With regards to the frequency domain pattern, study further a Comb-N SL-PRS design. Study at least the following aspects:

■ N>=1 (where N=1 corresponds to full RE mapping pattern)
■ Fully staggered SL-PRS pattern (e.g., M symbols of SL-PRS with comb-N with M=N and, at each symbol a different RE offset is used), Partially staggered SL-PRS pattern (e.g., M symbol(s) of SL-PRS with comb-N, with M<N, at each symbol a different RE offset is used), Unstaggered SL-PRS patterns (e.g., M symbol(s) of SL-PRS with comb- N, at each symbol a same RE offset is used, N > 1)
■ The number of symbols of SL-PRS within a slot

  ◦ Any relation to the comb-N option
  ◦ RE offset pattern repetitions within a slot

**Agreement**

With regards to the SL Positioning resource allocation, study further the following 2 options for SL Positioning resource (pre-)configuration:

■ Option 1: Dedicated resource pool for SL-PRS

  ◦ Include in the study at least the following aspects:

    - which slots can be used, SL frame structure, SL positioning slot structure, multiplexing of SL-PRS with control information (if included in the same slot)
    - positioning measurement report
    - whether a dedicated frequency allocation (e.g., layerBWP) is needed for SL PRS
    - resource allocation procedure(s) of SL-PRS
    - This option may or may not include control information (i.e., configuration/activation/deactivation/triggering of SL-PRS) for the purpose of SL positioning operation

■ Option 2: Shared resource pool with sidelink communication.

  ◦ Include in the study at least the following aspects:

    - co-existence between SL communication and SL positioning, backward compatibility
    - Multiplexing considerations of SL-PRS with other PHY channels (PSCCH, PSSCH, PSFCH) and any modifications in the SL-slot structure

**Agreement**

With regards to the SL-PRS resource allocation, study the following two schemes:

■ Scheme 1: Network-centric operation SL-PRS resource allocation (e.g. similar to a legacy Mode 1 solution)

  ◦ The network (e.g. gNB, LMF, gNB & LMF) allocates resources for SL-PRS

■ Scheme 2: UE autonomous SL-PRS resource allocation (e.g. similar to legacy Mode 2 solution)

  ◦ At least one of the UE(s) participating in the sidelink positioning operation allocates resources for SL-PRS
  ◦ Applicable regardless of the network coverage

- FFS: potential mechanisms, if needed, for SL-PRS resource coordination across a number of transmitting UEs (e.g. IUC-like solutions).
  - Note: Other Schemes are not precluded to be studied
  - FFS how to handle resource allocation of SL-Positioning measurement report

\*\*\*\*\*\*\*\*\*\*\*\*\*\*\*\*\*\*\*\*\*\*\*\*\*\*\*\*\*\*\*\* QUOTATION [7] END \*\*\*\*\*\*\*\*\*\*\*\*\*\*\*\*\*\*\*\*\*\*\*\*\*\*\*\*\*\*\*\*

In RAN1 #110 ([8] RAN1 Chair's Notes of 3GPP TSG RAN WG1 #110), there are various agreements on sidelink positioning.

\*\*\*\*\*\*\*\*\*\*\*\*\*\*\*\*\*\*\*\*\*\*\*\*\*\*\*\*\*\*\*\* QUOTATION [8] START \*\*\*\*\*\*\*\*\*\*\*\*\*\*\*\*\*\*\*\*\*\*\*\*\*\*\*\*\*\*\*\*

Agreement

With regards to the Positioning methods supported using at least SL measurements, potential candidate positioning methods include at least the following:

  ◦ RTT-type solution(s) using SL
  ◦ SL-AoA
  ◦ SL-TDOA

- Note: other methods can still be studied
- Note: The above categorization does not necessarily mean that there will be separate SL positioning methods specified.

Agreement

A new reference signal should be introduced for supporting SL positioning/ranging.

Agreement

Regarding SL-PRS resource allocation, both Scheme 1 and Scheme 2 should be introduced for supporting SL positioning/ranging:

  - Scheme 1: Network-centric operation SL-PRS resource allocation (e.g. similar to a legacy Mode 1 solution)

    ◦ The network (e.g. gNB, LMF, gNB & LMF) allocates resources for SL-PRS.

  - Scheme 2: UE autonomous SL-PRS resource allocation (e.g. similar to legacy Mode 2 solution)

    ◦ At least one of the UE(s) participating in the sidelink positioning operation allocates resources for SL-PRS

Agreement

With regards to the SL Positioning resource allocation, one of the following alternatives should be introduced for supporting SL positioning/ranging:

  - Alt. 1: only dedicated resource pool(s) can be (pre-)configured for SL-PRS
  - Alt. 2: either dedicated resource pool(s) and/or shared resource pool(s) with sidelink communication can be (pre-)configured for SL-PRS
  - Note: whether other signals/channels can be present in the dedicated resource pool can be further discussed

Agreement

With regards to the frequency domain pattern, a Comb-N SL-PRS occupying M symbol(s) design should be introduced for the support of NR SL positioning

- Note: there could be multiple values for M, N

Agreement

- With regards to the configuration/activation/deactivation/triggering of SL-PRS, Option 3 from the previous corresponding RAN1 #109 agreement will not be considered further.
- With regards to reservation of SL-PRS, it can be considered based on the Option 1 or Option 2 from the previous corresponding RAN1 #109 agreement.

Agreement

With regards to the frequency domain pattern for multi-symbol SL-PRS, prioritize partially and fully staggered SL-PRS.

- Note: this does not preclude comb N=1
- FFS: single symbol SL-PRS, if supported

****************************** QUOTATION [8] END ******************************

For RAN1 #110bis, some contributions (e.g., [9] R1-2208453; [10] R1-2208773; [11] R1-2209058; [12] R1-2209213; and [13] R1-2209483) on sidelink positioning are quoted.
****************************** QUOTATION [9] START ******************************

### 6.1 Resource allocation in Scheme 1

In Scheme 1, gNB controls the resource allocation for SL-PRS transmission. The general procedure can be described as follows. When a UE wants to transmit SL-PRS according to certain positioning service, it first sends the SL-PRS transmission request to the gNB to request resources. Upon the request of the UE, gNB grants certain resources for transmitting the SL-PRS. The granted resource can be carried by physical layer signaling, such as DCI. The general diagram of resource allocation in Scheme 1 can be illustrated in Figure 16.

For partial coverage scenario, it could be beneficial if one in-coverage UE could help to request SL-PRS for other out-of-coverage UEs. We think that the request of SL-PRS may include both the SL-PRS requirement for UE-A itself and for another OOC UE. As the requirement of SL-PRS, such as number of slots, it can be carried by uplink MAC CE rather than UCI due to the limit capacity of uplink physical layer signaling.

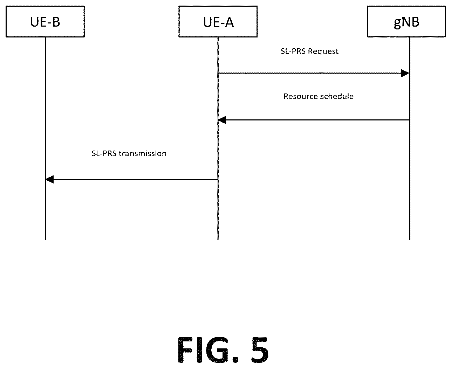

**FIG. 5 is a reproduction of Figure 26: Diagram of resource allocation procedure in Scheme 1 from** R1-2208453, "Discussion on SL positioning solutions", Huawei, HiSilicon.

*Proposal 17: Support to request SL-PRS transmission for the UE itself or for another UE to the gNB.*

- *SL-PRS transmission request to a gNB is indicated by MAC CE, which also includes the requested SL-PRS characteristics.*

- *The grant of SL-PRS resource indicated by DCI.*

****************************** QUOTATION [9] END ******************************
****************************** QUOTATION [10] START ******************************

For scheme 1, the DCI indication should be supported for resource information transmission. Notice that DCI format 3_0 is defined for SL scheduling. A natural choice is to define extra fields in DCI 3_0 to load the necessarily information. Yet is related to the amount of fields that should to be reserved for SL-PRS resource allocation. It is recommended to reuse DCI format 3_0 if the reserved number of fields is relatively small. Otherwise, it could be better to define a new DCI format exclusively for SL-PRS. Parameters in each SL-PRS configuration may include SL-PRS priority, SL-PRS periodicity and offset, SL-PRS comb size, number of symbols, etc.

*Proposal 8: Considering the amount of fields that should to be reserved for SL-PRS resource allocation, it is recommended to reuse DCI format 3_0 if the reserved fields is relatively small Otherwise, it could be better to define a new DCI format exclusively for SL-PRS.*

****************************** QUOTATION [10] END ******************************

*************************** QUOTATION [11] START ***************************

**5.2.1 Scheme-1**

For scheme-1 operation in a dedicated resource pool, the resource allocation should be defined in a similar way as for mode-1 SL communication. This indicates that the SL-PRS transmissions are scheduled via the DCI. In this case, a new DCI format may need to be defined for SL-PRS resource allocation.

**Proposal 1:**

- **For SL-PRS transmissions in a dedicated resource pool using scheme-1 resource allocation, study the use of DCI signaling for SL-PRS resource allocation.**

*************************** QUOTATION [11] END ***************************

*************************** QUOTATION [12] START ***************************

For SL-PRS configuration delivery, there is an FFS in the RAN1#110 agreement saying that if NW is to allocate SL-PRS configuration to scheme 1 UE, whether the SL-PRS configuration should come from gNB and/or LMF. Considering the UE may usually be configured with periodic or aperiodic SL-PRS together, we think a unified design is desired, that is, regardless of periodic/aperiodic/seme-persistent SL-PRS, serving gNB of the UE should configure the SL-PRS configuration to UE.

*Proposal 18: In scheme 1, support serving gNB of the UE to configure and send SL-PRS configuration to UE.*

In sidelink resource allocation mode 1 according to TS 38.214 [9], for SL data transmission, dynamic grant, configured grant type 1 and configured grant type 2 are supported.

- For sidelink dynamic grant, the PSSCH transmission is scheduled by a DCI format 3_0.

- For sidelink configured grant type 2, the configured grant is activated by a DCI format 3_0.

- For sidelink configured grant type 1, the PSSCH transmission follows the higher layer configuration.

Dynamic grant and CG type2, CG type1 in SL communication correspond to aperiodic SL-PRS, semi-persistent SL-PRS and periodic SL-PRS. In order to support mode 1 resource allocation for SL positioning, DCI can be used to dynamically or semi-persistently schedule the SL-PRS resource(s). We should consider whether a new DCI format is needed: (1) DCI format 3_0 can be reused and extra fields related to SL-PRS transmission should be added to DCI format 3_0. (2) A new DCI format exclusively for SL-PRS can be introduced, the new DCI with a CRC scrambled by 'SL-PRS-RNTI' can be designed to indicate/select several SL-PRS resource configurations.

*Proposal 19: Support using DCI to dynamically or semi-persistently schedule SL-PRS and consider whether a new DCI format is needed.*

For the periodic SL-PRS configuration (with shares the significant part of current LPP), there exists an issue. Different UEs may belong to different gNB's reach, when serving gNB provides SL-PRS configuration to scheme 1 UE for transmitting, the scheme 1 UEs with different serving gNBs may possibly acquire SL-PRS configuration with some resource conflict. This will lead to an issue that, UEs will have interface with each other when sending the SL-PRS according to the overlapping SL-PRS configuration.

*************************** QUOTATION [12] END ***************************

*************************** QUOTATION [13] START ***************************

There were discussions in RAN1#109-e meeting on the resource pool for SL positioning. The first option is to use a dedicated resource pool for SL positioning, and the second option is to share a resource pool for SL positioning with SL communication. Because the bandwidth requirements for the SL communication and SL PRS transmission are different from each other, sharing a resource pool for both purpose may not be feasible. If the resource pool bandwidth is determined for SL PRS transmission, the most of the SL resources may be wasted in SL communication. If the resource pool bandwidth is determined for SL communication, the positioning accuracy may not be satisfied due to insufficient bandwidth for SL PRS transmission. Therefore, it is more practical and beneficial to use a dedicated resource pool at least for SL PRS transmission.

*Proposal 11: A dedicated resource pool is used for SL PRS transmission to provide a sufficient bandwidth for SL positioning accuracy requirement.*

Except the SL PRS resource, all the other signals or channels for SL positioning are not relevant to the positioning accuracy requirement. Those signals or channels may include the SL procedure initiation message, the control channel associated with SL PRS, the measurement report, and the SL PRS retransmission request in case of no reception or insufficient reception quality of SL PRS. The above signals or channels can be transmitted separately from the resource pool for SL PRS transmission. They can be transmitted based on the existing SL communication method.

One issue is whether or not a shared resource pool for SL communication is used for transmission of the above signals and channels for SL positioning. If a shared resource pool is used, there could be some impact on the SL resources for SL communication and possibly the compatibility issue with the legacy V2X devices using the resource pool. If a separate resource pool is used for transmission of the above signals and channels for SL positioning, maybe the format or the content of the PSCCH and PSSCH can be modified to be used for SL positioning purpose.

*Proposal 12: Other signals/channels associated with SL PRS (e.g. the control channel, the measurement report, etc.) are transmitted in a resource pool different from the one for SL PRS transmission.*

- *Further study is needed whether the resource pool can be shared with the one for SL communication.*

If the control channel associated with the SL PRS is transmitted in the resource pool shared with the SL communication, the backward compatible way of transmission is an important issue. A new $2^{nd}$ SCI format is the most appropriate solution to be used for a control channel for SL PRS. In this case, a $2^{nd}$ SCI format indicator in the $1^{st}$ SCI indicates that the associated $2^{nd}$ SCI carries the control information about the SL PRS resources, which is transmitted in the dedicated resource pool for SL PRS transmission.

Another possibility may be to use MAC CE for the control channel associate with SL PRS. This could be considered when the payload size of the control channel is relatively large. But the part of SL PRS configuration can be (pre-)configured in a resource pool as discussed above, the remaining amount of SL PRS configuration will not be that problematic to be carried by the $2^{nd}$ SCI.

*Proposal 13: New $2^{nd}$ SCI format is introduced for a control channel associated with SL PRS.*

- *$2^{nd}$ SCI format indicator in $1^{st}$ SCI indicates that $2^{nd}$ SCI is used for SL PRS control channel.*

When LMF or network allocates the SL PRS resources to UE, DCI includes at least the following fields for SL PRS resources.

- *Resource pool index for SL PRS transmission*
- *SL PRS resource information*

  - *Resource timing*
  - *Periodicity and offset*
  - *Comb pattern*
  - *Number of symbols*
  - *etc.*

The value of each parameter is selected within the allowed set of values (pre-)configured in a resource pool. If the multiple SL PRS configurations are allowed in a resource pool, the SL PRS configuration index can be included.

This issue needs further study.

**Proposal 23:** *When LMF or gNB allocates the SL PRS resources to UE, DCI indicates at least the resource pool index and SL PRS resource information.*

• *Further study is needed whether SL PRS configuration index is also indicated.*

When UE selects the SL PRS resources based on sensing, in addition to the field indicated by DCI when a network allocates the SL PRS resources, the source/destination ID of the SL PRS TX and RX UE needs to be included. SCI can also include the flag to indicate whether the retransmission request is applied for the SL PRS. As a result, the associated control channel (SCI) includes at least the following fields for SL PRS resources.

• *Source/destination ID*
• *Resource pool index for SL PRS transmission*
• *SL PRS resource information*

  ▪ *Resource timing*
  ▪ *Periodicity/offset*
  ▪ *Comb pattern*
  ▪ *Number of symbols*
  ▪ *etc.*

• *Retransmission request flag*

******************************* QUOTATION [13] END *******************************

In Long Term Evolution (LTE) Release 17 (e.g., [5] 3GPP TS 38.212 V17.1.0 (2022-03) 3GPP), positioning on Uu interface between network and device is supported. Downlink (DL) Positioning Reference Signal (PRS) is specified as Positioning RS for supporting LTE positioning functionality.

In New Radio (NR) Release 17 (e.g., [4] 3GPP TS 38.211 V17.1.0 (2022-03) 3GPP; TSG RAN; NR), positioning on Uu interface is also introduced. DL PRS and Uplink (UL) Sounding Reference Signal-Positioning (SRS-Pos) are specified as Positioning RS for supporting NR positioning functionality. Various positioning methods are introduced, such as Time Difference Of Arrival (TDOA), Round Trip Time (RTT), Angle of Arrival (AoA), and/or Angle of Departure (AoD). For time-based positioning methods, larger bandwidth for Positioning RS is required for higher accuracy positioning.

In NR Release-18 (e.g., [6] RP-213588), study on "NR Positioning Enhancements" will investigate higher accuracy, lower latency location, high integrity and reliability requirements resulting from new applications and industry verticals for 5G. It will also study feasibility of potential solutions for sidelink (SL) positioning, considering relative positioning, ranging, and absolute positioning, wherein the SL positioning is operated in device-to-device interface or the PC5-interface between device and device. The device can mean, or can be replaced as, User Equipment (UE).

In the RAN1 #109-e and #110 meetings (e.g., [7] RAN1 Chair's Notes of 3GPP TSG RAN WG1 #109-e; [8] RAN1 Chair's Notes of 3GPP TSG RAN WG1 #110), RAN1 agreed to study RTT-type solutions using SL, SL-AoA, SL-TDOA, SL-AoD with regard to positioning methods supported using SL measurements. Accordingly, a new reference signal for SL positioning/ranging will be introduced, and existing DL PRS or UL SRS-Pos design and SL design framework can be used as a starting point. The new reference signal for SL positioning/ranging may be noted as SL PRS.

For NR Release-16/17 sidelink design, sidelink slots can be utilized for Physical Sidelink Broadcast Channel (PSBCH) or Physical Sidelink Control Channel (PSCCH)/Physical Sidelink Shared Channel (PSSCH)/Physical Sidelink Feedback Channel (PSFCH) transmission/reception. PSBCH is Time Division Multiplexed (TDMed), in slot level, from PSCCH/PSSCH/PSFCH. It means that sidelink slots, except slots for PSBCH, can be utilized for PSCCH/PSSCH/PSFCH transmission/reception. Moreover, the concept of sidelink resource pool for sidelink communication is utilized for PSCCH/PSSCH and/or PSFCH transmission/reception. A sidelink (communication) resource pool will comprise a set of sidelink slots (except slots for PSBCH) and a set of frequency resources. Different sidelink (communication) resource pools may be TDMed and/or Frequency Division Multiplexed (FDMed). More specifically, a PSCCH in one sidelink (communication) resource pool can only schedule PSSCH resource(s) in the same one sidelink (communication) resource pool. A PSCCH in one sidelink (communication) resource pool is not able to schedule PSSCH resource(s) in other sidelink (communication) resource pools. For a PSCCH/PSSCH, associated PSFCH is in the same sidelink (communication) resource pool, instead of in different sidelink (communication) resource pools.

One sidelink (communication) resource pool will comprise multiple sub-channels in frequency domain, wherein a sub-channel comprises multiple contiguous Physical Resource Blocks (PRBs) in frequency domain. One PRB comprises multiple Resource Elements (REs), e.g., one PRB consists of 12 REs. Configuration of the sidelink resource pool will indicate the number of PRBs of each sub-channel in the corresponding sidelink resource pool. Sub-channel based resource allocation in frequency domain is supported for PSSCH. For a PSSCH resource scheduled by a PSCCH in the same sidelink slot, fixed relationship between the PSCCH and the PSSCH resource is specified, which means that the PSCCH will be located in the lowest (index of) sub-channel of the scheduled PSSCH resource. As for scheduled PSSCH resource in different slot(s), the starting frequency position of the scheduled PSSCH resource will be scheduled/indicated by sidelink control information, instead of a fixed relationship.

In current NR Release-16/17 sidelink design, one sidelink control information (SCI) could indicate at most three PSSCH resources via Frequency resource assignment and/or Time resource assignment in the SCI. The SCI may comprise a 1st stage SCI and a 2nd stage SCI. The 1st stage SCI may be transmitted via PSCCH. The 2nd stage SCI may be transmitted via multiplexed with the scheduled PSSCH resource in the same sidelink slot, e.g., the first PSSCH resource. In other words, the SCI can schedule at most two PSSCH resources in later sidelink slots, e.g., the second PSSCH resource and/or the third PSSCH resource. The at most three PSSCH resources are in different slots in a sidelink (communication) resource pool. The at most three PSSCH resources are within 32 consecutive slots in a sidelink resource pool. The at most three PSSCH resources are utilized/associated with a same data packet, e.g., a same Transport Block (TB) or a same Medium Access Control (MAC) Protocol Data Unit (PDU).

When a receiver (RX) UE receives the one SCI in a specific slot, the specific slot would be a reference slot or a first slot for determining the 32 consecutive slots in a sidelink (communication) resource pool. The first PSSCH resource is in the specific slot where the one SCI is received. The starting sub-channel of the first PSSCH resource is the sub-channel in which the PSCCH is received. Time resource assignment in the SCI would indicate a time resource indicator value (TRIV). If the time resource indicator value is zero, the SCI schedules only one PSSCH resource, i.e., the first PSSCH resource. For configuration of maximum number per reserve being 2, one time resource indicator value would provide information of one additional slot (in addition to the reference slot), e.g., the time resource indicator value indicates/derives a value $t_1$, $1 \leq t_1 \leq 31$, wherein $t_1$ means/denotes a first time offset, in logical slots of a sidelink resource pool, between the second PSSCH resource and the first PSSCH resource. For configuration of maximum number per reserve being 3, one time resource indicator value would provide information of one or two additional slots (in additional to the reference slot), e.g., the time resource indicator value indicates/derives a value $t_1$ and/or $t_2$, $1 \leq t_1 \leq 30$ and $t_1 < t_2 \leq 31$, wherein $t_1$ means/denotes a first time offset, in logical slots of a sidelink resource pool, between the second PSSCH resource and the first PSSCH resource, and wherein $t_2$ means/denotes a second time offset, in logical slots of the sidelink resource pool, between the third PSSCH resource and the first PSSCH resource. Frequency resource assignment would indicate a frequency resource indicator value (FRIV). For configuration of maximum number per reserve being 2, one frequency resource indicator value would provide information of one starting sub-channel (for the second PSSCH resource) and a number of sub-channels (for each of the two PSSCH resources). For configuration of maximum number per reserve being 3, one frequency resource indicator value would provide information of one or two starting sub-channels (for the second PSSCH resource and/or the third PSSCH resource respectively) and a number of sub-channels (for each of the three PSSCH resources).

Moreover, resource reservation for another TB by a SCI could be (pre-)configured as enabled or not enabled or not configured in a sidelink (communication) resource pool. When a sidelink (communication) resource pool is configured as enabled such resource reservation, the sidelink (communication) resource pool is configured with a set of reservation period values. Possible reservation periods could be 0, 1:99, 100, 200, 300, 400, 500, 600, 700, 800, 900, 1000 ms. The resource reservation period field in a SCI in the sidelink (communication) resource pool could indicate which reservation period value for (future) resource reservation. The size/number of the set of reservation period values could be from 1 to 16.

In current NR Release-16/17 sidelink design, there are two sidelink resource allocation modes defined for NR sidelink communication:

- mode 1 is that the base station/network node can schedule sidelink resource(s) to be used by the UE for sidelink transmission(s);

- mode 2 is that the UE determines (i.e., base station/network node does not schedule) sidelink transmission resource(s) within sidelink resources configured by the base station/network node or pre-configured sidelink resources.

For network scheduling mode, e.g., NR sidelink resource allocation mode 1, the network node may transmit an SL grant, e.g., Downlink Control Information (DCI) format 3_0, on Uu interface for scheduling at most three PSSCH resources (for a same data packet). The SL grant comprises a "time gap" field and "Lowest index of the subchannel allocation to the initial transmission" fields for indicating the first PSSCH resource and/or the PSCCH resource in the specific slot, and also comprises "Frequency resource assignment" field and "Time resource assignment" field for indicating the second PSSCH resource and/or the third PSSCH resource (if any). The SL grant also comprises a "resource pool index" for indicating one sidelink (communication) resource pool, wherein the scheduled at most three PSSCH resources are within the indicated one sidelink (communication) resource pool. The Transmitter (TX) UE may perform PSCCH and PSSCH transmissions on PC5 interface, in response to the received sidelink grant, for a data packet. The Uu interface means the wireless interface for communication between the network and the UE. The PC5 interface means the wireless interface for communication (directly) between UEs/devices.

For UE (autonomous) selection mode, e.g., NR sidelink resource allocation mode 2, since transmission resource is not scheduled via network node, the UE may require performing sensing before selecting a resource for transmission (e.g., sensing-based transmission), in order to avoid resource collision and interference from or to other UEs (especially UEs using LTE/NR sidelink). Full sensing is supported in NR Rel-16 sidelink, while partial sensing is supported in NR Rel-17 sidelink. Based on a result of the sensing procedure, the UE can determine a valid/identified resource set. The valid/identified resource set may be reported to higher layers (of the UE). The UE may (randomly) select one or multiple valid/identified resources from the valid/identified resource set to perform sidelink transmission(s) from the UE. The sidelink transmission(s) from the UE may be PSCCH and/or PSSCH transmission.

As described above, new reference signal for SL positioning/ranging, noted as SL PRS, will be introduced for NR positioning enhancement. For supporting time-based positioning methods, larger bandwidth for SL PRS is required for higher accuracy positioning. It is quite possible that the required bandwidth for SL PRS may be 10MHz, 20MHz, or more. Such larger bandwidth will be hard to be multiplexed with PSCCH/PSSCH, and even harder to be confined within one sidelink resource pool with PSCCH/PSSCH resources. Thus, with regard to the SL Positioning resource allocation (e.g., [7] RAN1 Chair's Notes of 3GPP TSG RAN WG1 #109-e), RAN1 will study further Option 1: Dedicated resource pool for SL-PRS and Option 2: Shared resource pool with sidelink communication (i.e., PSCCH/PSSCH and/or PSFCH). Moreover, some sidelink control information may be provided by TX UE for scheduling/indicating/allocating SL PRS resources, in order to let RX UE know where/when to receive/measure corresponding SL PRS. The sidelink control information for scheduling/indicating/allocating SL PRS resources may be multiplexed in the dedicated resource pool for SL-PRS of option 1, or be transmitted on PSCCH in other sidelink resource pool with sidelink communication.

Furthermore, given the larger bandwidth requirement of SL PRS, Comb-N SL-PRS design can be supported for providing more available SL PRS resources, and configured/adjusted symbol number can be supported as one SL PRS occasion. According to RAN1 #109-e (e.g., [7] RAN1 Chair's Notes of 3GPP TSG RAN WG1 #109-e), there are at least some possible designs of SL PRS pattern, given $M$ symbol and comb-$N$:

- Fully staggered SL-PRS pattern, $M=N$, and at each symbol a different RE offset is used,

- Partially staggered SL-PRS pattern, $M<N$, at each symbol a different RE offset is used,

- Unstaggered SL-PRS patterns, $N > 1$, at each symbol a same RE offset is used.

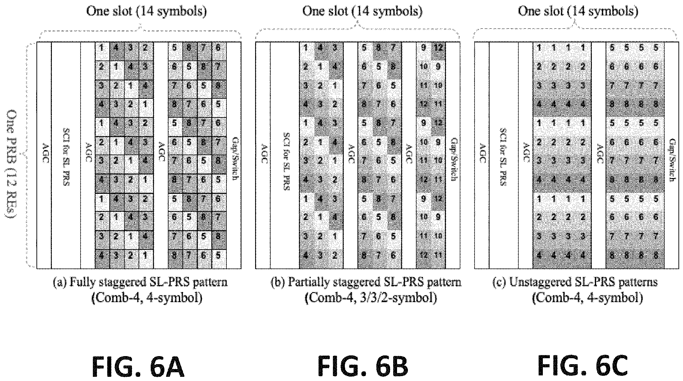

As shown with the instances in FIGS. 6A-6C for option 1, multiple SL PRSs can be multiplexed within one PRB and one slot. Note that one SL PRS will occupy a lot of contiguous PRBs, e.g., 50 PRBs for 10MHz bandwidth with 15kHz subcarrier spacing. FIGS. 6A-6C just show SL PRS patterns within one PRB. Preferably in various embodiments, the first symbol may be utilized for Automatic Gain Control (AGC). For one SL PRS pattern, the (immediately) preceding symbol may or may not be utilized for AGC. The last symbol may be utilized as gap symbol for possible TX/RX switch. For one SL PRS pattern, the (immediately) preceding symbol may or may not be utilized for possible TX/RX switch, depending on future design. Preferably in various embodiments, 0~3 symbols may be utilized for transmitting SCI for SL PRS, depending on future design on how to transmit the SCI for SL PRS. For case of no symbol for transmitting SCI for SL PRS in the dedicated resource pool for SL-PRS, the SCI for SL PRS may be transmitted on PSCCH in other sidelink resource pool with sidelink communication.

As shown with the instance in FIG. 6A, when fully staggered SL-PRS pattern of $M=N=4$ is applied for SL PRS pattern, and when there are two SL PRS occasions within one slot, 8 SL PRSs may be multiplexed with different index 1~8. Each SL PRS may be derived or determined based on associated frequency offset (in unit of RE). For the former SL PRS occasion, 4 SL PRSs with index 1~4 may be derived or determined based on associated frequency offset. For instance, SL PRS with index 4 is derived or determined based on frequency offset = 0. SL PRS with index 2 is derived or determined based on frequency offset = 2. For the later SL PRS occasion, 4 SL PRSs with index 5~8 may be derived or determined based on associated frequency offset. For instance, SL PRS with index 8 is derived or determined based on frequency offset = 0. SL PRS with index 5 is derived or determined based on frequency offset = 3.

As shown with the instance in FIG. 6B, when partially staggered SL-PRS pattern of $N=4$, M=3/3/2 for three SL PRS occasions is applied for SL PRS pattern, 12 SL PRSs may be multiplexed with different index 1~12. Each SL PRS may be derived or determined based on associated frequency offset (in unit of RE).

As shown with the instance in FIG. 6C, when unstaggered SL-PRS pattern of $N$=4, $M$=4 is applied for SL PRS pattern, and when there are two SL PRS occasions within one slot, 8 SL PRSs may be multiplexed with different index 1~8. Each SL PRS may be derived or determined based on associated frequency offset (in unit of RE). For instance, SL PRS with index 4 is derived or determined based on frequency offset = 0 in the former SL PRS occasion. SL PRS with index 2 is derived or determined based on frequency offset = 2 in the former SL PRS occasion. For instance, SL PRS with index 8 is derived or determined based on frequency offset = 0 in the later SL PRS occasion. SL PRS with index 7 is derived or determined based on frequency offset = 1 in the later SL PRS occasion.

Preferably in various embodiments, for comb-N SL-PRS design/structure, possible frequency offsets may be 0 to (N-1).

According to RAN1 #110 (e.g., [8] RAN1 Chair's Notes of 3GPP TSG RAN WG1 #110), scheme 1 and scheme 2 are introduced for SL PRS resource allocation.

- Scheme 1: Network-centric operation SL-PRS resource allocation (e.g., similar to a legacy Mode 1 solution)

  -- The network (e.g., Next Generation NodeB (gNB), Location Management Function (LMF), gNB & LMF) allocates resources for SL-PRS.

- Scheme 2: UE autonomous SL-PRS resource allocation (e.g., similar to legacy Mode 2 solution)

  -- At least one of the UE(s) participating in the sidelink positioning operation allocates resources for SL-PRS.

For scheme 1, the network node may transmit an SL grant for scheduling SL PRS resource(s). However, SL PRS resource may be multiplexed via RE level, while PSSCH is multiplexed via subchannel level. Moreover, SL PRS resources may be in the dedicated resource pool for SL PRS, while PSSCH is in the sidelink communication resource pool (or said sidelink resource pool with sidelink communication). Thus, some contributions (e.g., [10] R1-2208773; [11] R1-2209058; [12] R1-2209213; and [13] R1-2209483) propose to (1) define extra fields in DCI format 3_0 (i.e., current sidelink grant for scheduling PSSCH resource) to load SL PRS resource information, or (2) define a new DCI format exclusively for SL PRS resource information, wherein the new DCI format is with Cyclic Redundancy Check (CRC) scrambled by 'SL-PRS-Radio Network Temporary Identifier (RNTI)'. The SL PRS resource information in either DCI format may include a resource pool index for SL PRS transmission, SL PRS resource timing, periodicity and offset, comb pattern, number of symbols, etc. However, the first proposal may unnecessarily increase size of DCI format 3_0, which may induce decoding performance degradation or a need of larger resources for transmitting the DCI format 3_0. The second proposal may increase UE decoding complexity on both DCI format 3_0 and a new DCI format, and it may also need to configure other RNTI(s) exclusively for SL PRS.

To deal with above issues on SL PRS resource allocation, some concepts, mechanisms, methods, and embodiments are provided as follows:
A TX UE may receive, from a network node, a DCI for sidelink. The DCI may comprise information associated with sidelink resource type. The TX UE may determine corresponding sidelink resource(s) based on the information associated with sidelink resource type. Preferably in various embodiments, the TX UE may interpret/decode/acquire bits or fields in the DCI based on the information associated with sidelink resource type.

Preferably in various embodiments, when/if the information associated with resource type indicates/corresponds to sidelink data transmission (e.g., PSSCH), the TX UE may interpret/decode/acquire bits or fields in the DCI according to sidelink data transmission-related fields.

Preferably in various embodiments, when/if the information associated with resource type indicates/corresponds to sidelink reference signal (e.g., SL PRS, SL beam management RS, ...), the TX UE may interpret/decode/acquire bits or fields in the DCI according to sidelink reference signal-related fields.

In one embodiment A1, the information associated with sidelink resource type may be or may derive from (a field of) resource pool index indicated in the DCI. The resource pool index may correspond to one sidelink resource pool (identity). The one sidelink resource pool may be configured for sidelink data transmission or configured for sidelink reference signal (e.g., based on Radio Resource Control (RRC) configuration of the one sidelink resource pool). Preferably in various embodiments, the one sidelink resource pool may be configured for (either) one of sidelink data transmission or sidelink reference signal transmission (e.g., based on RRC configuration of the one sidelink resource pool). Preferably or alternatively in various embodiments, the one sidelink resource pool may be configured for (either) one of only sidelink data transmission, only sidelink reference signal transmission, or both sidelink data transmission and sidelink reference signal (e.g., based on RRC configuration of the one sidelink resource pool). Preferably in various embodiments, a first sidelink resource pool for sidelink data transmission is associated with a first resource pool identity/index. A second sidelink resource pool for sidelink reference signal is associated with a second resource pool identity/index. A third sidelink resource pool for both sidelink data transmission and sidelink reference signal is associated with a third resource pool identity/index. The first resource pool identity/index is different from the second resource pool identity/index. The second resource pool identity/index is different from the third resource pool identity/index. The third resource pool identity/index is different from the first resource pool identity/index. Preferably in various embodiments, for one sidelink resource pool, associated resource pool identity/index is configured/provided in RRC configuration of the one sidelink resource pool.

Preferably in various embodiments, the field of resource pool index may comprise a number of bits. Preferably in various embodiments, the number of bits may be derived/determined based on the (total) number of resource pools configured by higher layer. Preferably in various embodiments, the number of bits may be derived/determined based on the number of resource pools configured for sidelink data transmission (e.g., $I_{PSSCH}$) and the number of resource pools configured for sidelink reference signal (e.g., $I_{SL\_PRS}$). The number of bits may be $\left\lceil \log_2(I_{PSSCH} + I_{SL\_PRS}) \right\rceil$. Preferably in various embodiments, the number of resource pools configured for sidelink data transmission (e.g., $I_{PSSCH}$) comprises resource pool associated with data associated with discovery, control plan data, or user plan data. Preferably or alternatively in various embodiments, the number of bits may be derived/determined based on the number of resource pools configured for sidelink data transmission (e.g., $I_{PSSCH}$), the number of resource pools configured for sidelink reference signal (e.g., $I_{SL\_PRS}$), and the number of resource pools configured for both sidelink data transmission and sidelink reference signal (e.g., $I_{PSSCH+SL\_PRS}$). The number of bits may be

$$\left\lceil \log_2(I_{PSSCH} + I_{SL\_PRS} + I_{PSSCH+SL\_PRS}) \right\rceil \text{ bits}.$$

Preferably in various embodiments, the (field of) resource pool index may be put in a first/initial/beginning field of the DCI for sidelink (at least when UE does not support sidelink carrier aggregation). Preferably and/or alternatively in various embodiments, the resource pool index may be put in an earlier field of the DCI for sidelink than field(s) for SL PRS (e.g., sidelink reference signal-related fields) and/or field(s) for SL scheduled information (e.g., sidelink data transmission-related fields). Preferably in various embodiments, the resource pool index may be put in later than the carrier indicator field (which is used to indicate which carrier in frequency list). When the TX UE receives/decodes the DCI, the TX UE may (firstly) determine one indicated sidelink resource pool based on the resource pool index.

When/if the one indicated sidelink resource pool is for sidelink data transmission, the TX UE may interpret/decode/acquire/determine following fields, in the DCI, according to sidelink data transmission-related fields. When/if the resource pool index is associated with the first resource pool identity/index, the TX UE may interpret/decode/acquire/determine following fields, in the DCI, according to sidelink data transmission-related fields.

When/if the one indicated sidelink resource pool is for sidelink reference signal, the TX UE may interpret/decode/acquire/determine following fields, in the DCI, according to sidelink reference signal-related fields. When/if the resource pool index is associated with the second resource pool identity/index, the TX UE may interpret/decode/acquire/determine following fields, in the DCI, according to sidelink reference signal-related fields.

When/if the one indicated sidelink resource pool is for both sidelink data transmission and sidelink reference signal, the TX UE may interpret/decode/acquire/determine following fields, in the DCI, according to both sidelink data transmission-related fields and sidelink reference signal-related fields. When/if the resource pool index is associated with the third resource pool identity/index, the TX UE may interpret/decode/acquire/determine following fields, in the DCI, according to both sidelink data transmission-related fields and sidelink reference signal-related fields.

When/if the one indicated sidelink resource pool is for both sidelink data transmission and sidelink reference signal, the TX UE may base on one specific field in the DCI to interpret/decode/acquire/determine following fields, in the DCI, according to (either) one of sidelink data transmission-related fields or sidelink reference signal-related fields. When/if the resource pool index is associated with the third resource pool identity/index, the TX UE may base on one specific field in the DCI to interpret/decode/acquire/determine following fields, in the DCI, according to (either) one of sidelink data transmission-related fields or sidelink reference signal-related fields. Preferably in various embodiments, the one specific field may indicate (either) one of sidelink data transmission or sidelink reference signal. Preferably in various embodiments, the one specific field is different than the resource pool index field. Preferably in various embodiments (no matter if TX UE is being configured with at least one pool associated with or for both sidelink data transmission and sidelink reference signal), DCI comprises the one specific field. Preferably in various embodiments, when at least one resource pool associated with or for both sidelink data transmission and sidelink reference signal, DCI comprises the one specific field.

Preferably in various embodiments, the total bit number of the sidelink data transmission-related fields may be the same as the total bit number of the sidelink reference signal-related fields. Preferably in various embodiments, the padding-bit number of the sidelink data transmission-related fields may be different from the padding-bit number of the sidelink reference signal-related fields, (such that their total bit numbers are the same).

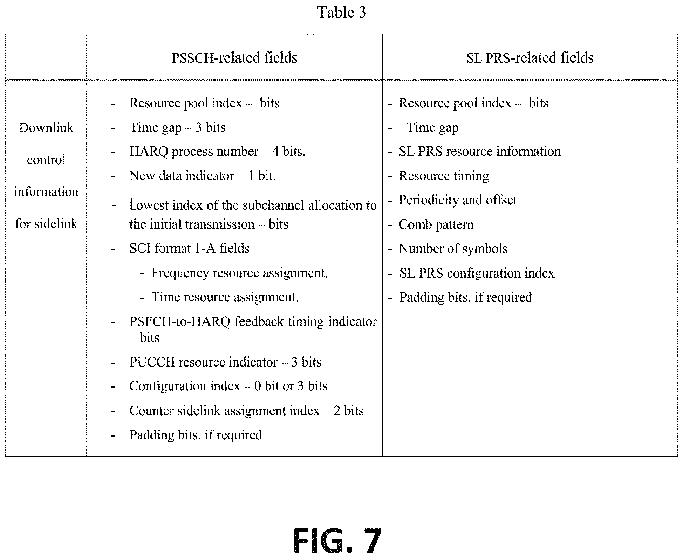

As shown in the instance of FIG. 7 (Table 3), the sidelink data transmission-related fields may be the PSSCH-related fields, and the sidelink reference signal-related fields may be the SL PRS-related fields. Note that FIG. 7 is just an instance, which does not restrict what the SL PRS-related fields will be.

In one embodiment A2, the information associated with sidelink resource type may be a specific field in the DCI. Preferably in various embodiments, the specific field may indicate (either) one of sidelink data transmission or sidelink reference signal. Preferably in various embodiments, the specific field may indicate that the DCI schedules (either) resource(s) of sidelink data transmission or resource(s) of sidelink reference signal. Preferably or alternatively in various embodiments, the specific field may indicate (either) one of sidelink data transmission, sidelink reference signal, or both sidelink data transmission and sidelink reference signal. Preferably in various embodiments, the specific field may indicate that the DCI schedules resource(s) of sidelink data transmission and/or resource(s) of sidelink reference signal.

Preferably in various embodiments, the specific field may be put in the first/initial/beginning field of the DCI for sidelink. When the TX UE receives/decodes the DCI, the TX UE may (firstly) determine, based on the specific field, that the DCI schedules resource(s) of sidelink data transmission or resource(s) of sidelink reference signal.

When/if the DCI is for sidelink data transmission, the TX UE may interpret/decode/acquire/determine following fields, in the DCI, according to sidelink data transmission-related fields.

When/if the DCI is for sidelink reference signal, the TX UE may interpret/decode/acquire/determine following fields, in the DCI, according to sidelink reference signal-related fields.

When/if the DCI is for both sidelink data transmission and sidelink reference signal, the TX UE may interpret/decode/acquire/determine following fields, in the DCI, according to sidelink data transmission-related fields and sidelink reference signal-related fields.

Preferably in various embodiments, the total bit number of the sidelink data transmission-related fields may be the same as the total bit number of the sidelink reference signal-related fields. Preferably in various embodiments, the padding-bit number of the sidelink data transmission-related fields may be different from the padding-bit number of the sidelink reference signal-related fields, (such that their total bit numbers are the same).

The DCI may comprise a field of resource pool index, which may correspond to one sidelink resource pool (identity). The TX UE may determine the one sidelink resource pool based on the field of resource pool index and the specific field.

Preferably in various embodiments, when/if the specific field indicates sidelink data transmission or when/if the specific field indicates that the DCI schedules resource(s) of sidelink data transmission, the TX UE may determine the one sidelink resource pool as a sidelink resource pool configured for sidelink data transmission and associated with indicated index of the field of resource pool index.

Preferably in various embodiments, when/if the specific field indicates sidelink reference signal or when/if the specific field indicates that the DCI schedules resource(s) of sidelink reference signal, the TX UE may determine the one sidelink resource pool as a sidelink resource pool configured for sidelink reference signal and associated with indicated index of the field of resource pool index.

Preferably in various embodiments, when/if the specific field indicates both sidelink data transmission and sidelink reference signal, or when/if the specific field indicates that the DCI schedules resource(s) of sidelink data transmission and resource(s) of sidelink reference signal, the TX UE may determine the one sidelink resource pool as a sidelink resource pool configured for both sidelink data transmission and sidelink reference signal and associated with indicated index of the field of resource pool index.

Preferably in various embodiments, a sidelink resource pool may be configured for sidelink data transmission or configured for sidelink reference signal (e.g., based on RRC configuration of the one sidelink resource pool). Preferably in various embodiments, a sidelink resource pool may be configured for (either) one of sidelink data transmission or sidelink reference signal transmission (e.g., based on RRC configuration of the one sidelink resource pool). Preferably in various embodiments, a sidelink resource pool may be configured for (either) one of sidelink data transmission, sidelink reference signal transmission, or both sidelink data transmission and sidelink reference signal (e.g., based on RRC configuration of the one sidelink resource pool). Preferably in various embodiments, a first sidelink resource pool for sidelink data transmission is associated with a first resource pool identity/index. A second sidelink resource pool for sidelink reference signal is associated with a second resource pool identity/index. A third sidelink resource pool for both sidelink data transmission and sidelink reference signal is associated with a third resource pool identity/index. The first resource pool identity/index may be the same or different from the second resource pool identity/index. The second resource pool identity/index may be the same or different from the third resource pool identity/index. The third resource pool identity/index may be the same or different from the first resource pool identity/index. Preferably in various embodiments, for a sidelink resource pool, the associated resource pool identity/index is configured/provided in RRC configuration of the sidelink resource pool.

Preferably in various embodiments, the field of resource pool index may comprise a number of bits. Preferably in various embodiments, the number of bits may be derived/determined based on a maximum number among the number of resource pools configured for sidelink data transmission (e.g., $I_{PSSCH}$) and the number of resource pools configured for sidelink reference signal (e.g., $I_{SL\_PRS}$). The number of bits may be $\lceil \log_2(max(I_{PSSCH}, I_{SL\_PRS})) \rceil$ bits bits. Preferably or alternatively in various embodiments, the number of bits may be derived/determined based on a maximum number among the number of resource pools configured for sidelink data transmission (e.g., $I_{PSSCH}$), the number of resource pools configured for sidelink reference signal (e.g., $I_{SL\_PRS}$), and the number of resource pools configured for both sidelink data transmission and sidelink reference signal (e.g., $I_{PSSCH+SL\_PRS}$). The number of bits may be

$$\lceil \log_2(max(I_{PSSCH}, I_{SL\_PRS}, I_{PSSCH+SL\_PRS})) \rceil \text{ bits}$$

For embodiments above, preferably in various embodiments, the first sidelink resource pool for sidelink data transmission may be a sidelink resource pool enabled/configured/supported for sidelink data transmission/reception. Preferably in various embodiments, the first sidelink resource pool for sidelink data transmission may not comprise resources of the sidelink reference signal. The first sidelink resource pool is a sidelink communication resource pool or a sidelink resource pool with sidelink communication.

Preferably in various embodiments, the second sidelink resource pool for sidelink reference signal may be a sidelink resource pool enabled/configured/supported for sidelink reference signal transmission/reception. Preferably in various embodiments, the second sidelink resource pool for sidelink reference signal may not comprise resources of the sidelink data transmission. The second sidelink resource pool is a dedicated resource pool for sidelink reference signal. Preferably in various embodiments, the first sidelink resource pool for sidelink data transmission may be TDMed with the second sidelink resource pool for sidelink reference signal.

Preferably in various embodiments, the third sidelink resource pool for both sidelink data transmission and sidelink reference signal may be a sidelink resource pool enabled/configured/supported for both sidelink data transmission/reception and sidelink reference signal transmission/reception. Preferably in various embodiments, the third sidelink resource pool for both sidelink data transmission and sidelink reference signal may comprise resources of the sidelink data transmission and resources of the sidelink reference signal. Preferably in various embodiments, the third sidelink resource pool for both sidelink data transmission and sidelink reference signal may be a shared sidelink resource pool for both sidelink data transmission and sidelink reference signal.

Preferably in various embodiments, the sidelink data transmission may be PSSCH. Preferably in various embodiments, bandwidth of a sidelink data transmission may comprise part or all of resource blocks of the first sidelink resource pool for sidelink data transmission. Preferably in various embodiments, bandwidth of a sidelink data transmission may comprise part or all of sub-channels of the first sidelink resource pool for sidelink data transmission. Preferably in various embodiments, bandwidth of a sidelink data transmission may comprise part or all of resource blocks of the third sidelink resource pool for both sidelink data transmission and sidelink reference signal. Preferably in various embodiments, bandwidth of a sidelink data transmission may comprise part or all of sub-channels of the third sidelink resource pool for sidelink data transmission and sidelink reference signal.

Preferably in various embodiments, the sidelink reference signal may be any one of SL PRS or SL beam management RS. Preferably in various embodiments, the sidelink reference signal may be SL CSI-RS (for beam management), which is not combined within a PSSCH (bandwidth) in frequency domain. Preferably in various embodiments, the sidelink reference signal may require large bandwidth. Preferably in various embodiments, the sidelink reference signal may be utilized for (absolute and/or relative) positioning and/or ranging. Preferably in various embodiments, the sidelink reference signal may be utilized for any of time-based positioning/ranging methods and/or angle-based positioning/ranging methods. Preferably in various embodiments, the sidelink reference signal may be utilized for any of TDoA, RTT-based positioning/ranging, AoA, AoD, or carrier phase measurement based positioning. Preferably in various embodiments, the sidelink reference signal may be utilized for (High-Resolution) localization, sensing, or imaging. Preferably in various embodiments, the sidelink reference signal may be utilized for beam management (e.g., in FR2). Preferably in various embodiments, bandwidth of a sidelink reference signal may comprise all resource blocks of the second sidelink resource pool for sidelink reference signal. Preferably in various embodiments, bandwidth of a sidelink reference signal may comprise all resource blocks of the third sidelink resource pool for both sidelink data transmission and sidelink reference signal.

Preferably in various embodiments, the sidelink data transmission-related fields may comprise any field(s) of resource pool index, time gap, Hybrid Automatic Repeat Request (HARQ process number, New data indicator, Lowest index of the subchannel allocation to the initial transmission, Frequency resource assignment, Time resource assignment, PSFCH-to-HARQ feedback timing indicator, Physical Uplink Control Channel (PUCCH) resource indicator, Configuration index (for sidelink data transmission), Counter sidelink assignment index, padding bits.

Preferably in various embodiments, the sidelink reference signal-related fields may comprise any field(s) of resource pool index, time gap, sidelink reference signal resource information, sidelink reference signal resource timing, Periodicity and offset, comb pattern (e.g., *N*), frequency offset (in RE level), number of symbols (e.g., *M*), configuration index for sidelink reference signal, padding bits.

Preferably in various embodiments, based on information associated with sidelink resource type, DCI with the same RNTI may be used for different purposes. Preferably in various embodiments, based on different RNTIs, dynamic or semi-static SL grant could be distinguished. Preferably in various embodiments, when DCI scrambled with SL-RNTI is associated with SL PRS (based on the specific field or the resource pool index field), could be associated with dynamically scheduled SL PRS (which means SL PRS configuration index is reserved as shown in FIG. 7). Preferably in various embodiments, when DCI scrambled with SL-Configured Scheduling (CS)-RNTI is associated with SL PRS (based on the specific field or the resource pool index field), could be associated with semi-statically scheduled SL PRS (e.g., SL PRS configuration index would point out one SL PRS configuration for semi-statically SL PRS transmission).

Preferably in various embodiments, PSSCH-related fields and SL PRS-related fields may share one or more common fields. Preferably in various embodiments, the one or more common fields may be "time gap", "HARQ process number", and/or "New data indicator". Preferably in various embodiments, one rationale is to have the same validation for configured (or semi-statically) sidelink data transmission or SL PRS transmission.

Preferably or alternatively in various embodiments, if the DCI is scrambled with SL-CS-RNTI or the DCI is used for activating or releasing (periodic/configured/semi-static) SL PRS, validation field(s) for SL PRS may be different than validation field(s) for SL CG type 2 (for PSSCH).

Preferably in various embodiments, for SL CG type-2 (for PSSCH), validation field(s) may be the DCI is scrambled with SL-CS-RNTI, Network Device Interface (NDI) field is set to 0, and HARQ process number is set to all 0s, and preferably the DCI is used for activating the SL Configured Grant (CG) type 2 (based on SL CG configuration index). Preferably in various embodiments, (when TX UE is configured with at least one sidelink resource pool with SL PRS or configured with performing SL PRS transmission, and/or SL PRS configuration index needed optionally activation command), validation for SL CG type-2 (for PSSCH) may further be based on the resource pool index set to sidelink resource pool for sidelink data transmission (other than sidelink resource pool for SL PRS transmission). Preferably in various embodiments (when TX UE is configured with at least one sidelink resource pool with SL PRS or configured with performing SL PRS transmission, and/or SL PRS configuration index needed optionally activation command), validation for SL CG type-2 (for PSSCH) may further be based on the specific field setting/indicating to sidelink data transmission (other than SL PRS transmission).

Preferably in various embodiments, for SL CG type-2 (for PSSCH), validation field(s) may be the DCI is scrambled with SL-CS-RNTI, NDI field is set to 0, and HARQ process number is set to all 1s, frequency resource assignment set to all 1s, and preferably the DCI is used for release SL CG type 2 (based on SL CG configuration index). Preferably in various embodiments (when TX UE is configured with at least one sidelink resource pool with SL PRS or configured with performing SL PRS transmission, and/or SL PRS configuration index needed optionally activation command), validation for SL CG type-2 may further be based on the resource pool index set to sidelink resource pool for sidelink data transmission (other than sidelink resource pool for SL PRS transmission). Preferably in various embodiments (when TX UE is configured with at least one sidelink resource pool with SL PRS or configured with performing SL PRS transmission, and/or SL PRS configuration index needed optionally activation command), validation for SL CG type-2 may further be based on the specific field setting/indicating to sidelink data transmission (other than SL PRS transmission).

Preferably in various embodiments, for activating SL PRS configuration (e.g., for semi-statically scheduled SL PRS), validation field(s) may be any one or combination of the DCI is scrambled with SL-CS-RNTI, NDI field is set to 0, HARQ process number is set to all 0s, and preferably the DCI is used for activating SL PRS configuration (based on SL PRS configuration index). Preferably in various embodiments (when TX UE is configured with at least one sidelink resource pool with SL PRS or configured with performing SL PRS transmission, and/or SL PRS configuration index needed optionally activation command), validation for SL PRS configuration may further be based on the resource pool index set to sidelink resource pool for SL PRS transmission (other than sidelink resource pool for sidelink data transmission). Preferably in various embodiments (when TX UE is configured with at least one sidelink resource pool with SL PRS or configured with performing SL PRS transmission, and/or SL PRS configuration index needed optionally activation command), validation for SL PRS configuration may further be based on the specific field setting/indicating to SL PRS transmission (other than sidelink data transmission).

Preferably in various embodiments, for activating SL PRS configuration (e.g., for semi-statically scheduled SL PRS), validation field(s) may be any one or combination of the DCI is scrambled with SL-CS-RNTI, NDI field is set to 1, HARQ process number is set to all 1s, SL PRS resource information set to a particular value, and preferably the DCI is used for releasing SL PRS configuration (based on SL PRS configuration index). Preferably in various embodiments (when TX UE is configured with at least one sidelink resource pool with SL PRS or configured with performing SL PRS transmission, and/or SL PRS configuration index needed optionally activation command), validation for SL PRS configuration may further be based on the resource pool index set to sidelink resource pool for SL PRS transmission (other than sidelink resource pool for sidelink data transmission). Preferably in various embodiments (when TX UE is configured with at least one sidelink resource pool with SL PRS or configured with performing SL PRS transmission, and/or SL PRS configuration index needed optionally activation command), validation for SL PRS configuration may further be based on the specific field setting/indicating to SL PRS transmission (other than sidelink data transmission).

Preferably in various embodiments, for validating SL PRS configuration, any one or combination of SL PRS-related field (which may not comprise HARQ process number, NDI, different kind of field of resource information) may be used. Preferably in various embodiments, for activating SL PRS configuration, any one or combination of RNTI for DCI, particular value/code-point of time gap, particular value/code-point of resource timing, particular value/code-point of periodicity and offset, particular value/code-point of comb pattern, particular value/code-point of number of symbols are used for validation (for the DCI for activating SL PRS configuration). Preferably in various embodiments (when TX UE is configured with at least one sidelink resource pool with SL PRS or configured with performing SL PRS transmission, and/or SL PRS configuration index needed optionally activation command), validation for SL PRS configuration may further be based on the resource pool index set to sidelink resource pool for SL PRS transmission (other than sidelink resource pool for sidelink data transmission). Preferably in various embodiments (when TX UE is configured with at least one sidelink resource pool with SL PRS or configured with performing SL PRS transmission, and/or SL PRS configuration index needed optionally activation command), validation for SL PRS configuration may further be based on the specific field setting/indicating to SL PRS transmission (other than sidelink data transmission).

Preferably in various embodiments, validation for SL PRS release and validation for SL PRS activation may be based on the same or different set of field(s). Preferably in various embodiments, even for the same field used for activation and release SL PRS configuration, value/code-point of the same field may be associated with different for activation and release SL PRS configuration.

Preferably in various embodiments, particular value/code-point of any one field in SL PRS-related fields may correspond to invalid or unused code-point of such field.

Preferably in various embodiments, particular value/code-point of time gap means the time gap value is associated with a value smaller than a processing threshold (e.g., particular value/code-point of time gap is 0). Preferably in various embodiments, particular value/code-point of SL PRS resource information is associated with a code-point which is not valid for SL PRS assignment or there is no defined code-point of SL PRS resource, information could be a particular value/code-point of SL PRS resource information. Preferably in various embodiments, in one example, there are N valid/defined SL PRS resource information, and there are invalid/undefined SL resource information. Preferably in various embodiments, particular value/code-point of SL PRS resource information corresponds to the last or first or predefined value/code-point among the invalid/undefined SL resource information. Preferably in various embodiments, a similar concept could be reused for determining particular value/code-point of resource timing, value/code-point of Periodicity and offset, particular value/code-point of Comb pattern, and/or particular value/code-point of Number of symbols by replacing SL PRS resource information.

Preferably in various embodiments, invalid could be replaced by unused.

Preferably in various embodiments, if validation is failed, the TX UE receiving DCI would discard all fields or the DCI. Preferably in various embodiments, if validation is failed, the TX UE receiving DCI would discard all fields or the DCI. Preferably in various embodiments, if validation succeeds, the TX UE receiving DCI would activate at least one SL PRS configuration based on "SL PRS configuration index". Preferably in various embodiments, when SL PRS configuration index field is associated with a code-point associated with more than one SL PRS configurations, if validation succeeds, the TX UE receiving DCI would activate the more than one SL PRS configurations. Preferably in various embodiments, distinguishing between SL PRS and SL data transmission could be based on RNTI. Preferably in various embodiments, SL-RNTI could be replaced by SL-PRS-RNTI. Preferably in various embodiments, SL-CS-RNTI could be replaced by SL-PRS-CS-RNTI.

Preferably in various embodiments, when the TX UE validates for a received DCI, one or more fields used for validation is different between activation and release. Preferably in various embodiments, when the TX UE validates for a received DCI, one or more fields used for validation is different between SL PRS and SL data transmission. Preferably in various embodiments, the same field between SL PRS and SL data transmission may be the same RNTI (e.g., SL-CS-RNTI). Preferably in various embodiments, the TX UE may jointly validate the one or more fields for the received DCI. Preferably in various embodiments, the TX UE could, based on RNTI and/or resource pool index and/or the specified field, determine the received DCI is associated with sidelink data transmission or SL PRS transmission. Preferably in various embodiments, based on the determined type, the TX UE could determine distinguish/different set of one or more fields to validate for the received DCI.

Any of the above and herein methods, alternatives, teachings, concepts, and embodiments may be combined or applied simultaneously.

Preferably in various embodiments, the slot may mean a sidelink slot. Preferably in various embodiments, the slot may be represented/replaced as a Transmission Time Interval (TTI).

Preferably in various embodiments, the sidelink slot may mean slot for sidelink. Preferably in various embodiments, a TTI may be a subframe (for sidelink) or slot (for sidelink) or sub-slot (for sidelink). Preferably in various embodiments, a TTI comprises multiple symbols, e.g., 12 or 14 symbols. Preferably in various embodiments, a TTI may be a slot (fully/partially) comprising sidelink symbols. Preferably in various embodiments, a TTI may mean a transmission time interval for a sidelink (data) transmission. Preferably in various embodiments, a sidelink slot or a slot for sidelink may contain all Orthogonal Frequency Division Multiplexing (OFDM) symbols available for sidelink transmission. Preferably in various embodiments, a sidelink slot or a slot for sidelink may contain consecutive number symbols available for sidelink transmission. Preferably in various embodiments, a sidelink slot or a slot for sidelink means that a slot is included/comprised in a sidelink resource pool.

Preferably in various embodiments, the symbol may mean a symbol indicated/configured for sidelink.

Preferably in various embodiments, the slot may mean/comprise a sidelink slot associated with the (sidelink) resource pool. Preferably in various embodiments, the slot may not mean/comprise a sidelink slot associated with other (sidelink) resource pool.

Preferably in various embodiments, the contiguous/consecutive slots may mean contiguous sidelink slots in/for the (sidelink) resource pool.

Preferably in various embodiments, the contiguous/consecutive slots may or may not be contiguous/consecutive in physical slots. It means that the contiguous/consecutive slots in the sidelink resource pool may be not contiguous/consecutive from the aspect of a physical slot. Preferably in various embodiments, the contiguous/consecutive slots may or may not be contiguous/consecutive in sidelink slots in/for a sidelink Bandwidth Part (BWP) or a sidelink carrier/cell. It means that the contiguous/consecutive slots in the (sidelink) resource pool may be not contiguous/consecutive from the aspect of sidelink slots in a sidelink BWP or a sidelink carrier/cell. Preferably in various embodiments, there may be one or more (sidelink) resource pools in a sidelink BWP or a sidelink carrier/cell.

Preferably in various embodiments, a sub-channel is a unit for sidelink resource allocation/scheduling (for PSSCH). Preferably in various embodiments, a sub-channel may comprise multiple contiguous PRBs in frequency domain. Preferably in various embodiments, the number of PRBs for each sub-channel may be (pre-)configured for a sidelink resource pool. Preferably in various embodiments, a sidelink resource pool (pre-)configuration may indicate/configure the number of PRBs for each sub-channel. Preferably in various embodiments, the number of PRBs for each sub-channel may be any of 10, 12, 15, 20, 25, 50, 75, 100. Preferably in various embodiments, a sub-channel may be represented as a unit for sidelink resource allocation/scheduling. Preferably in various embodiments, a sub-channel may mean a set of consecutive PRBs in frequency domain. Preferably in various embodiments, a sub-channel may mean a set of consecutive resource elements in frequency domain.

Preferably in various embodiments, the first UE may have/maintain/establish multiple sidelink links/connections on PC5 interface. For different sidelink links/connections, the first UE may perform sidelink transmission/reception to/from different paired UE(s).

Preferably in various embodiments, the first UE may have/maintain/establish a first sidelink link/connection and a second sidelink link/connection. The paired UE of the first sidelink link/connection may be different from the paired UE of the second sidelink link/connection. Preferably in various embodiments, the sidelink logical channel(s) associated with (the paired UE of) the first sidelink link/connection are separate/independent from the sidelink logical channel(s) associated with (the paired UE of) the second sidelink link/connection.

Preferably in various embodiments, the UE may be/mean/comprise/replace a device.

Preferably in various embodiments, the sidelink transmission/reception may be UE-to-UE transmission/reception. Preferably in various embodiments, the sidelink transmission/reception may be device-to-device transmission/reception. Preferably in various embodiments, the sidelink transmission/reception may be Vehicle-to-Everything (V2X) transmission/reception. Preferably in various embodiments, the sidelink transmission/reception may be Pedestrian-to-Everything (P2X) transmission/reception. Preferably in various embodiments, the sidelink transmission/reception may be on a PC5 interface.

Preferably in various embodiments, the PC5 interface may be a wireless interface for communication between device and device. Preferably in various embodiments, the PC5 interface may be a wireless interface for communication between devices. Preferably in various embodiments, the PC5 interface may be a wireless interface for communication between UEs. Preferably in various embodiments, the PC5 interface may be a wireless interface for V2X or P2X communication. Preferably in various embodiments, the Uu interface may be a wireless interface for communication between a network node and a device. Preferably in various embodiments, the Uu interface may be a wireless interface for communication between a network node and a UE.

Preferably in various embodiments, the first UE may be a first device. Preferably in various embodiments, the first UE may be a vehicle UE. Preferably in various embodiments, the first UE may be a V2X UE.

Preferably in various embodiments, the second UE may be a second device. Preferably in various embodiments, the second UE may be a vehicle UE. Preferably in various embodiments, the second device may be a V2X UE.

Preferably in various embodiments, the first UE and the second device are different devices.

Preferably in various embodiments, frequency offset could be replaced by comb-offset (e.g., 0~N-1).

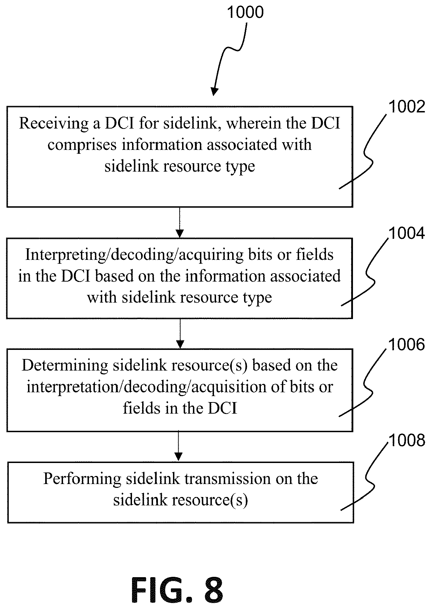

Referring to FIG. 8, with this and other concepts, systems, and methods of the present invention, a method 1000 for a first device in a wireless communication system comprises receiving a DCI for sidelink, wherein the DCI comprises information associated with sidelink resource type (step 1002), interpreting/decoding/acquiring bits or fields in the DCI based on the information associated with sidelink resource type (step 1004), determining sidelink resource(s) based on the interpretation/decoding/acquisition of bits or fields in the DCI (step 1006), and performing sidelink transmission on the sidelink resource(s) (step 1008).

Referring back to FIGS. 3 and 4, in one or more embodiments from the perspective of a first device, the device 300 includes a program code 312 stored in memory 310 of the first device. The CPU 308 could execute program code 312 to: (i) receive a DCI for sidelink, wherein the DCI comprises information associated with sidelink resource type; (ii) interpret/decode/acquire bits or fields in the DCI based on the information associated with sidelink resource type; (iii) determine sidelink resource(s) based on the interpretation/decoding/acquisition of bits or fields in the DCI; and (iv) performing sidelink transmission on the sidelink resource(s). Moreover, the CPU 308 can execute the program code 312 to perform all of the described actions, steps, and methods described above, below, or otherwise herein.

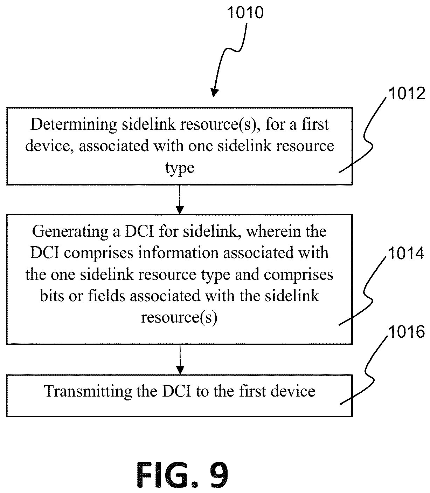

Referring to FIG. 9, with this and other concepts, systems, and methods of the present invention, a method 1010 for a network node in a wireless communication system comprises determining sidelink resource(s), for a first device, associated with one sidelink resource type (step 1012), generating a DCI for sidelink, wherein the DCI comprises information associated with the one sidelink resource type and comprises bits or fields associated with the sidelink resource(s) (step 1014), and transmitting the DCI to the first device (step 1016).

Referring back to FIGS. 3 and 4, in one or more embodiments from the perspective of a network node, the device 300 includes a program code 312 stored in memory 310 of the network node. The CPU 308 could execute program code 312 to: (i) determine sidelink resource(s), for a first device, associated with one sidelink resource type; (ii) generate a DCI for sidelink, wherein the DCI comprises information associated with the one sidelink resource type and comprises bits or fields associated with the sidelink resource(s); and (iii) transmit the DCI to the first device. Moreover, the CPU 308 can execute the program code 312 to perform all of the described actions, steps, and methods described above, below, or otherwise herein.

The following concepts and aspects can be applied, in whole or in part, to any of the above and below teachings and embodiments.

Preferably in various embodiments, the information associated with the (one) sidelink resource type is derived/included/determined from (a field of) resource pool index indicated in the DCI, and/or the resource pool index corresponds to one sidelink resource pool.

Preferably in various embodiments, the one sidelink resource pool is configured for either one of sidelink data transmission or sidelink reference signal transmission, or the one sidelink resource pool is configured for any one of (only) sidelink data transmission, (only) sidelink reference signal transmission, or both sidelink data transmission and sidelink reference signal.

Preferably in various embodiments, when/if the one indicated sidelink resource pool is for sidelink data transmission, the first device interprets/decodes/acquires/determines following fields, in the DCI, according to sidelink data transmission-related fields, or when/if the resource pool index is associated with a first resource pool identity/index, and when/if a first sidelink resource pool for sidelink data transmission is associated with the first resource pool identity/index, the first device may interpret/decode/acquire/determine following fields, in the DCI, according to sidelink data transmission-related fields.

Preferably in various embodiments, when/if the one indicated sidelink resource pool is for sidelink reference signal, the first device interprets/decodes/acquires/determines following fields, in the DCI, according to sidelink reference signal -related fields, or when/if the resource pool index is associated with a second resource pool identity/index, and when/if a second sidelink resource pool for sidelink reference signal is associated with the second resource pool identity/index, the first device may interpret/decode/acquire/determine following fields, in the DCI, according to sidelink reference signal-related fields.

Preferably in various embodiments, the first resource pool identity/index is different from the second resource pool identity/index.

Preferably in various embodiments, the field of resource pool index comprises a number of bits, and the number of bits is derived/determined based on the (total) number of resource pools configured by higher layer, or the number of bits is derived/determined based on the number of resource pools configured for sidelink data transmission and the number of resource pools configured for sidelink reference signal.

Preferably in various embodiments, the (field of) resource pool index is put in a first/initial/beginning field of the DCI for sidelink.

Preferably in various embodiments, the sidelink data transmission-related fields is/means the PSSCH-related fields, and/or the sidelink reference signal-related fields is/means the SL PRS-related fields.

Preferably in various embodiments, the information associated with the (one) sidelink resource type is a specific field in the DCI, and/or the specific field indicates (either) one of sidelink data transmission or sidelink reference signal, or the specific field indicates that the DCI schedules (either) resource(s) of sidelink data transmission or resource(s) of sidelink reference signal.

Preferably in various embodiments, the specific field is put in a first/initial/beginning field of the DCI for sidelink.

Preferably in various embodiments, when/if the DCI is for sidelink data transmission, the first device interprets/decodes/acquires/determines following fields, in the DCI, according to sidelink data transmission-related fields, or when/if the DCI is for sidelink reference signal, the first device interprets/decodes/acquires/determines following fields, in the DCI, according to sidelink reference signal-related fields.

Preferably in various embodiments, the DCI comprises a field of resource pool index, which corresponds to one sidelink resource pool (identity), and/or the first device determines the one sidelink resource pool based on the field of resource pool index and the specific field.

Preferably in various embodiments, the field of resource pool index comprises a number of bits, and the number of bits is derived/determined based on a maximum number among the number of resource pools configured for sidelink data transmission and the number of resource pools configured for sidelink reference signal.

Preferably in various embodiments, the sidelink data transmission-related fields is/means the PSSCH-related fields, and/or the sidelink reference signal-related fields is/means the SL PRS-related fields.

Preferably in various embodiments, the sidelink data transmission is/means PSSCH, and/or the sidelink reference signal is/means SL PRS or SL beam management RS, and/or the sidelink reference signal is utilized for positioning, ranging, or beam management.

Preferably in various embodiments, the first sidelink resource pool for sidelink data transmission is a sidelink resource pool enabled/configured/supported for sidelink data transmission/reception, and/or the first sidelink resource pool for sidelink data transmission does not comprise resources of the sidelink reference signal.

Preferably in various embodiments, the second sidelink resource pool for sidelink reference signal is a sidelink resource pool enabled/configured/supported for sidelink reference signal transmission/reception, and/or the second sidelink resource pool for sidelink reference signal does not comprise resources of the sidelink data transmission.

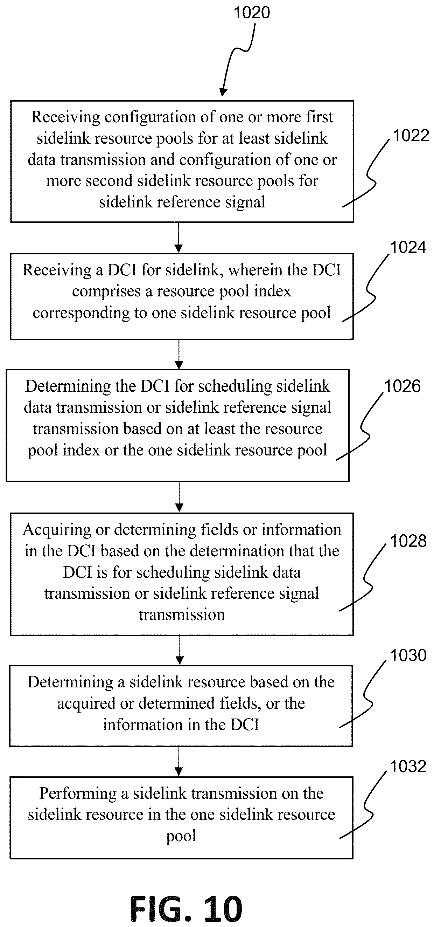

Referring to FIG. 10, with this and other concepts, systems, and methods of the present invention, a method 1020 for a first device in a wireless communication system comprises receiving configuration of one or more first sidelink resource pools for at least sidelink data transmission and configuration of one or more second sidelink resource pools for sidelink reference signal transmission (step 1022), receiving a DCI for sidelink, wherein the DCI comprises a resource pool index corresponding to one sidelink resource pool (step 1024), determining the DCI for scheduling sidelink data transmission or sidelink reference signal transmission based on at least the resource pool index or the one sidelink resource pool (step 1026), acquiring or determining fields or information in the DCI based on the determination that the DCI is for scheduling sidelink data transmission or sidelink reference signal transmission (step 1028), determining a sidelink resource based on the acquired or determined fields, or the information in the DCI (step 1030), and performing a sidelink transmission on the sidelink resource in the one sidelink resource pool (step 1032).

Preferably in various embodiments, when the one sidelink resource pool is configured for at least sidelink data transmission, the first device acquires or determines (following) fields or information, in the DCI, according to sidelink data transmission-related fields (not according to sidelink reference signal-related fields); and/or when the one sidelink resource pool is configured for at least sidelink data transmission, the first device determines fields, in the DCI, as sidelink data transmission-related fields; and/or when the one sidelink resource pool is configured for at least sidelink data transmission, the first device determines presence of sidelink data transmission-related fields and/or absence of sidelink reference signal-related fields in the DCI; and/or when the resource pool index is a first resource pool identity or index associated with a first sidelink resource pool for at least sidelink data transmission, the first device acquires or determines (following) fields or information, in the DCI, according to sidelink data transmission-related fields (not according to sidelink reference signal-related fields); and/or when the resource pool index is a first resource pool identity or index associated with a first sidelink resource pool for at least sidelink data transmission, the first device determines presence of sidelink data transmission-related fields and/or absence of sidelink reference signal-related fields in the DCI; and/or the first sidelink resource pool is configured for sidelink data transmission and (preferably with sidelink reference signal transmission).

Preferably in various embodiments, the sidelink data transmission means/is PSSCH transmission; and the sidelink data transmission-related fields comprise or mean PSSCH-related fields; and/or there is at least one first field in the sidelink data transmission-related fields and/or not in the sidelink reference signal-related fields; and/or the at least one first field comprises any one or any combination of a HARQ process number field, a new data indicator field, a frequency resource assignment for sub-channel, a PSFCH-to-HARQ feedback timing indicator field, or a PUCCH resource indicator field.

Preferably in various embodiments, when the one sidelink resource pool is configured for sidelink reference signal transmission, the first device acquires or determines (following) fields or information, in the DCI, according to sidelink reference signal-related fields (not according to sidelink data transmission-related fields); and/or when the one sidelink resource pool is configured for sidelink reference signal transmission, the first device determines fields, in the DCI, as sidelink reference signal-related fields; and/or when the one sidelink resource pool is configured for sidelink reference signal transmission, the first device determines presence of sidelink reference signal-related fields and/or absence of sidelink data transmission-related fields in the DCI; and/or when the resource pool index is a second resource pool identity or index associated with a second sidelink resource pool for sidelink reference signal transmission, the first device acquires or determines (following) fields or information, in the DCI, according to sidelink reference signal-related fields (not according to sidelink data transmission-related fields); and/or when the resource pool index is a second resource pool identity or index associated with a second sidelink resource pool for sidelink reference signal transmission, the first device determines presence of sidelink reference signal-related fields and/or absence of sidelink data transmission-related fields in the DCI; and/or the second sidelink resource pool is configured for sidelink reference signal transmission (not sidelink data transmission).

Preferably in various embodiments, the sidelink reference signal means/is SL PRS; and the sidelink reference signal-related fields comprise or mean SL-PRS-related fields; and/or there is at least one second field in the SL-PRS-related fields and/or not in the sidelink data transmission-related fields; and/or the at least one second field comprises at least one SL-PRS resource Identity(s) or Index(s) field.

Preferably in various embodiments, the first device determines the DCI for scheduling sidelink data transmission or sidelink reference signal transmission based on a type of the one sidelink resource pool; and/or when the one sidelink resource pool is among the one or more first sidelink resource pools for at least sidelink data transmission, the type of the one sidelink resource pool is for sidelink data transmission and (preferably with sidelink reference signal transmission); and/or when the one sidelink resource pool is among the one or more second sidelink resource pools for sidelink reference signal transmission, the type of the one sidelink resource pool is for sidelink reference signal transmission (not sidelink data transmission).

Preferably in various embodiments, a bit size of the DCI used for scheduling sidelink data transmission is same as a bit size of the DCI used for scheduling sidelink reference signal transmission; and/or a total bit number of sidelink data transmission-related fields, including padding bits if any, in the DCI used for scheduling sidelink data transmission is same as a total bit number of sidelink reference signal-related fields, including padding bits if any, in the DCI used for scheduling sidelink reference signal transmission.

Preferably in various embodiments, the DCI for sidelink is scrambled by a SL-RNTI or a SL-CS-RNTI; and/or RNTI for scrambling the DCI is same for the one or more first sidelink resource pools and the one or more second sidelink resource pools; and/or regardless if the one sidelink resource pool is among either the one or more first sidelink resource pools or the one or more second sidelink resource pools, a (same) RNTI is used for scrambling the DCI for sidelink; and/or a (same) RNTI is used for scrambling the DCI used for scheduling sidelink data transmission and for scrambling the DCI used for scheduling sidelink reference signal transmission.

Preferably in various embodiments, a field of the resource pool index is put in a first, an initial, or a beginning field of the DCI for sidelink; and/or the field of the resource pool index comprises a number of bits; and/or the number of bits is derived or determined based on total number of configured sidelink resource pools; and/or the number of bits is derived or determined based on number of the one or more first sidelink resource pools for at least sidelink data transmission and number of the one or more second sidelink resource pools for sidelink reference signal transmission.

Preferably in various embodiments, the one or more first sidelink resource pools and the one or more second sidelink resource pools are configured in a same carrier, or a same cell, or a same SL BWP.

Referring back to FIGS. 3 and 4, in one or more embodiments from the perspective of a first device, the device 300 includes a program code 312 stored in memory 310 of the first device. The CPU 308 could execute program code 312 to: (i) receive configuration of one or more first sidelink resource pools for at least sidelink data transmission and configuration of one or more second sidelink resource pools for sidelink reference signal transmission; (ii) receive a DCI for sidelink, wherein the DCI comprises a resource pool index corresponding to one sidelink resource pool; (iii) determine the DCI for scheduling sidelink data transmission or sidelink reference signal transmission based on at least the resource pool index or the one sidelink resource pool; (iv) acquire or determine fields or information in the DCI based on the determination that the DCI is for scheduling sidelink data transmission or sidelink reference signal transmission; (v) determine a sidelink resource based on the acquired or determined fields, or the information in the DCI; and (vi) perform a sidelink transmission on the sidelink resource in the one sidelink resource pool. Moreover, the CPU 308 can execute the program code 312 to perform all of the described actions, steps, and methods described above, below, or otherwise herein.

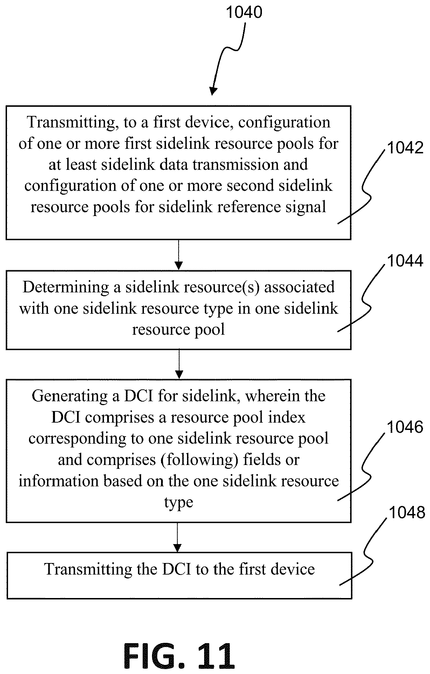

Referring to FIG. 11, with this and other concepts, systems, and methods of the present invention, a method 1040 for a network node in a wireless communication system comprises transmitting, to a first device, configuration of one or more first sidelink resource pools for at least sidelink data transmission and configuration of one or more second sidelink resource pools for sidelink reference signal transmission (step 1042), determining a sidelink resource(s) associated with one sidelink resource type in one sidelink resource pool (step 1044), generating a DCI for sidelink, wherein the DCI comprises a resource pool index corresponding to one sidelink resource pool and comprises (following) fields or information based on the one sidelink resource type (step 1046), and transmitting the DCI to the first device (step 1048).

Preferably in various embodiments, when the one sidelink resource pool is configured for at least sidelink data transmission, the network node generates or puts the (following) fields or information, in the DCI, according to sidelink data transmission-related fields (not according to sidelink reference signal-related fields); and/or when the one sidelink resource type is sidelink data transmission, the network node generates or puts the (following) fields or information, in the DCI, according to sidelink data transmission-related fields (not according to sidelink reference signal-related fields); and/or the one sidelink resource pool is configured for sidelink data transmission and (preferably with sidelink reference signal transmission).

Preferably in various embodiments, the sidelink data transmission means/is PSSCH transmission; and the sidelink data transmission-related fields comprise or mean PSSCH-related fields; and/or there is at least one first field in the sidelink data transmission-related fields and/or not in the sidelink reference signal-related fields; and/or the at least one first field comprises any one or any combination of a HARQ process number field, a new data indicator field, a frequency resource assignment for sub-channel, a PSFCH-to-HARQ feedback timing indicator field, or a PUCCH resource indicator field.

Preferably in various embodiments, when the one sidelink resource pool is configured for sidelink reference signal transmission, the network node generates or puts the (following) fields or information, in the DCI, according to sidelink reference signal-related fields (not according to sidelink data transmission-related fields); and/or when the one sidelink resource type is sidelink reference signal, the network node generates or puts the (following) fields or information, in the DCI, according to sidelink reference signal-related fields (not according to sidelink data transmission-related fields); and/or the one sidelink resource pool is configured for sidelink reference signal transmission (not sidelink data transmission).

Preferably in various embodiments, the sidelink reference signal means/is SL PRS; and the sidelink reference signal-related fields comprise or mean SL-PRS-related fields; and/or there is at least one second field in the sidelink reference signal-related fields and/or not in the sidelink data transmission-related fields; and/or the at least one second field comprises at least SL-PRS resource Identity(s) or Index(s) field.

Preferably in various embodiments, the one sidelink resource type is sidelink data transmission or sidelink reference signal; and/or a bit size of the DCI used for scheduling sidelink data transmission resource is same as a bit size of the DCI used for scheduling sidelink reference signal resource; and/or total bit number of sidelink data transmission-related fields, including padding bits if any, in the DCI used for scheduling sidelink data transmission resource is same as a total bit number of sidelink reference signal-related fields, including padding bits if any, in the DCI used for scheduling sidelink reference signal resource.

Preferably in various embodiments, the DCI for sidelink is scrambled by a SL-RNTI or a SL-CS-RNTI; and/or RNTI for scrambling the DCI is same for the one or more first sidelink resource pools and the one or more second sidelink resource pools; and/or regardless if the one sidelink resource pool is among either the one or more first sidelink resource pools or the one or more second sidelink resource pools, a (same) RNTI is used for scrambling the DCI for sidelink; and/or the one sidelink resource type is sidelink data transmission or sidelink reference signal; and/or a (same) RNTI is used for scrambling the DCI used for scheduling sidelink data transmission resource and for scrambling the DCI used for scheduling sidelink reference signal resource.

Preferably in various embodiments, a field of the resource pool index is put in a first, an initial, or a beginning field of the DCI for sidelink; and/or the field of the resource pool index comprises a number of bits; and/or the number of bits is derived or determined based on a total number of configured sidelink resource pools; and/or the number of bits is derived or determined based on a number of the one or more first sidelink resource pools for at least sidelink data transmission and a number of the one or more second sidelink resource pools for sidelink reference signal transmission.

Preferably in various embodiments, the one or more first sidelink resource pools and the one or more second sidelink resource pools are configured in a same carrier, or a same cell, or a same SL BWP.

Referring back to FIGS. 3 and 4, in one or more embodiments from the perspective of a network node, the device 300 includes a program code 312 stored in memory 310 of the network node. The CPU 308 could execute program code 312 to: (i) transmit, to a first device, configuration of one or more first sidelink resource pools for at least sidelink data transmission and configuration of one or more second sidelink resource pools for sidelink reference signal transmission; (ii) determine a sidelink resource(s) associated with one sidelink resource type in one sidelink resource pool; (iii) generate a DCI for sidelink, wherein the DCI comprises a resource pool index corresponding to one sidelink resource pool and comprises (following) fields or information based on the one sidelink resource type; and (iv) transmit the DCI to the first device. Moreover, the CPU 308 can execute the program code 312 to perform all of the described actions, steps, and methods described above, below, or otherwise herein.

Any combination of the above concepts or teachings can be jointly combined or formed to a new embodiment. The disclosed details and embodiments can be used to solve at least (but not limited to) the issues mentioned above and herein.

It is noted that any of the methods, alternatives, steps, examples, and embodiments proposed herein may be applied independently, individually, and/or with multiple methods, alternatives, steps, examples, and embodiments combined together.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects, concurrent channels may be established based on pulse repetition frequencies. In some aspects, concurrent channels may be established based on pulse position or offsets. In some aspects, concurrent channels may be established based on time hopping sequences. In some aspects, concurrent channels may be established based on pulse repetition frequencies, pulse positions or offsets, and time hopping sequences.

Those of ordinary skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of ordinary skill in the art would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects, any suitable computer-program product may comprise a computer-readable medium comprising codes relating to one or more of the aspects of the disclosure. In some aspects, a computer program product may comprise packaging materials.

While the invention has been described in connection with various aspects and examples, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method of a first device, comprising:

   receiving configuration of one or more first sidelink resource pools for at least sidelink data transmission and configuration of one or more second sidelink resource pools for sidelink reference signal transmission (1022); receiving a Downlink Control Information, in the following also referred to as DCI, for sidelink, wherein the DCI comprises a resource pool index corresponding to one sidelink resource pool (1024); determining the DCI for scheduling sidelink data transmission or sidelink reference signal transmission based on at least the resource pool index or the one sidelink resource pool (1026); acquiring or determining fields or information in the DCI based on the determination that the DCI is for scheduling sidelink data transmission or sidelink reference signal transmission (1028); determining a sidelink resource based on the acquired or determined fields, or the information in the DCI (1030); and performing a sidelink transmission on the sidelink resource in the one sidelink resource pool (1032).

2. The method of claim 1, wherein:

   when the one sidelink resource pool is configured for at least sidelink data transmission, the first device acquires or determines fields or information, in the DCI, according to sidelink data transmission-related fields; and/or when the one sidelink resource pool is configured for at least sidelink data transmission, the first device determines fields, in the DCI, as sidelink data transmission-related fields; and/or when the one sidelink resource pool is configured for at least sidelink data transmission, the first device determines presence of sidelink data transmission-related fields and/or absence of sidelink reference signal-related fields in the DCI; and/or when the resource pool index is a first resource pool identity or index associated with a first sidelink resource pool for at least sidelink data transmission, the first device acquires or determines fields or information, in the DCI, according to sidelink data transmission-related fields; and/or when the resource pool index is a first resource pool identity or index associated with a first sidelink resource pool for at least sidelink data transmission, the first device determines presence of sidelink data transmission-related fields and/or absence of sidelink reference signal-related fields in the DCI; and/or the first sidelink resource pool is configured for sidelink data transmission and with sidelink reference signal transmission.

3. The method of claim 1 or 2, wherein:

   when the one sidelink resource pool is configured for sidelink reference signal transmission, the first device acquires or determines fields or information, in the DCI, according to sidelink reference signal-related fields; and/or when the one sidelink resource pool is configured for sidelink reference signal transmission, the first device determines fields, in the DCI, as sidelink reference signal-related fields; and/or when the one sidelink resource pool is configured for sidelink reference signal, the first device determines presence of sidelink reference signal-related fields and/or absence of sidelink data transmission-related fields in the DCI; and/or when the resource pool index is a second resource pool identity or index associated with a second sidelink resource pool for sidelink reference signal transmission, the first device acquires or determines fields or information, in the DCI, according to sidelink reference signal-related fields; and/or when the resource pool index is a second resource pool identity or index associated with a second sidelink resource pool for sidelink reference signal transmission, the first device determines presence of sidelink reference signal-related fields and/or absence of sidelink data transmission-related fields in the DCI; and/or the second sidelink resource pool is configured for sidelink reference signal transmission.

4. The method of any one of claims 1 to 3, wherein:

   the first device determines the DCI for scheduling sidelink data transmission or sidelink reference signal transmission based on a type of the one sidelink resource pool; and/or when the one sidelink resource pool is among the one or more first sidelink resource pools for at least sidelink data transmission, the type of the one sidelink resource pool is for sidelink data transmission; and/or

when the one sidelink resource pool is among the one or more second sidelink resource pools for sidelink reference signal transmission, the type of the one sidelink resource pool is for sidelink reference signal transmission; and/or

a bit size of the DCI used for scheduling sidelink data transmission is same as a bit size of the DCI used for scheduling sidelink reference signal transmission; and/or

a total bit number of sidelink data transmission-related fields, including padding bits if any, in the DCI used for scheduling sidelink data transmission is same as a total bit number of sidelink reference signal-related fields, including padding bits if any, in the DCI used for scheduling sidelink reference signal transmission.

5. The method of any one of claims 1 to 4, wherein:

the DCI for sidelink is scrambled by a SL-Radio Network Temporary Identifier, in the following also referred to as RNTI, or a SL-Configured Scheduling, in the following also referred to as CS, -RNTI; and/or

RNTI for scrambling the DCI is same for the one or more first sidelink resource pools and the one or more second sidelink resource pools; and/or

regardless if the one sidelink resource pool is among either the one or more first sidelink resource pools or the one or more second sidelink resource pools, an RNTI is used for scrambling the DCI for sidelink; and/or

an RNTI is used for scrambling the DCI used for scheduling sidelink data transmission and for scrambling the DCI used for scheduling sidelink reference signal transmission.

6. A method of a network node, comprising:

transmitting, to a first device, configuration of one or more first sidelink resource pools for at least sidelink data transmission and configuration of one or more second sidelink resource pools for sidelink reference signal transmission (1042);

determining a sidelink resource associated with one sidelink resource type in one sidelink resource pool (1044);

generating a Downlink Control information, in the following also referred to as DCI, for sidelink, wherein the DCI comprises a resource pool index corresponding to one sidelink resource pool and comprises fields or information based on the one sidelink resource type (1046); and

transmitting the DCI to the first device (1048).

7. The method of claim 6, wherein:

when the one sidelink resource pool is configured for at least sidelink data transmission, the network node generates or puts the fields or information, in the DCI, according to sidelink data transmission-related fields; and/or

when the one sidelink resource type is sidelink data transmission, the network node generates or puts the fields or information, in the DCI, according to sidelink data transmission-related fields; and/or

the one sidelink resource pool is configured for sidelink data transmission and with sidelink reference signal transmission.

8. The method of claim 6 or 7, wherein:

when the one sidelink resource pool is configured for sidelink reference signal transmission, the network node generates or puts the fields or information, in the DCI, according to sidelink reference signal-related fields; and/or

when the one sidelink resource type is sidelink reference signal, the network node generates or puts the fields or information, in the DCI, according to sidelink reference signal-related fields; and/or

the one sidelink resource pool is configured for sidelink reference signal transmission.

9. The method of any one of claims 6 to 8, wherein:

the one sidelink resource type is sidelink data transmission or sidelink reference signal; and/or

a bit size of the DCI used for scheduling sidelink data transmission resource is same as a bit size of the DCI used for scheduling sidelink reference signal resource; and/or

total bit number of sidelink data transmission-related fields, including padding bits if any, in the DCI used for scheduling sidelink data transmission resource is same as a total bit number of sidelink reference signal-related fields, including padding bits if any, in the DCI used for scheduling sidelink reference signal resource.

**10.** The method of any one of claims 6 to 9, wherein:

the DCI for sidelink is scrambled by a SL-Radio Network Temporary Identifier, in the following also referred to as RNTI, or a SL-Configured Scheduling, in the following also referred to as CS, -RNTI; and/or
RNTI for scrambling the DCI is same for the one or more first sidelink resource pools and the one or more second sidelink resource pools; and/or
regardless if the one sidelink resource pool is among either the one or more first sidelink resource pools or the one or more second sidelink resource pools, an RNTI is used for scrambling the DCI for sidelink; and/or
the one sidelink resource type is sidelink data transmission or sidelink reference signal; and/or
an RNTI is used for scrambling the DCI used for scheduling sidelink data transmission resource and for scrambling the DCI used for scheduling sidelink reference signal resource.

**11.** The method of claim 2 or 7, or anyone of claims 3 to 5 being dependent at least on claim 2, or anyone of claims 8 to 10 being dependent at least on claim 7, wherein:

the sidelink data transmission-related fields comprise or mean Physical Sidelink Shared Channel, in the following also referred to as PSSCH, -related fields; and/or
there is at least one first field in the sidelink data transmission-related fields and/or not in the sidelink reference signal-related fields; and/or
the at least one first field comprises any one or any combination of a Hybrid Automatic Repeat Request, in the following also referred to as HARQ, process number field, a new data indicator field, a frequency resource assignment for sub-channel, a Physical Sidelink Feedback Channel, in the following also referred to as PSFCH, -to-HARQ feedback timing indicator field, or a Physical Uplink Control Channel, in the following also referred to as PUCCH, resource indicator field.

**12.** The method of claim 3 or 8, or anyone of claims 4 and 5 being dependent at least on claim 3, or anyone of claims 9 and 10 being dependent at least on claim 8, or claim 11 being dependent at least on claim 3 or 8, wherein:

the sidelink reference signal-related fields comprise or mean SideLink, in the following also referred to as SL, -Positioning Reference Signal, in the following also referred to as PRS, -related fields; and/or
there is at least one second field in the sidelink reference signal-related fields and/or not in the sidelink data transmission-related fields; and/or
the at least one second field comprises at least SL-PRS resource Identity or Index field.

**13.** The method of any one of claims 1 to 12, wherein:

a field of the resource pool index is put in a first, an initial, or a beginning field of the DCI for sidelink; and/or
the field of the resource pool index comprises a number of bits; and/or
the number of bits is derived or determined based on a total number of configured sidelink resource pools; and/or
the number of bits is derived or determined based on a number of the one or more first sidelink resource pools for at least sidelink data transmission and a number of the one or more second sidelink resource pools for sidelink reference signal transmission.

**14.** The method of any one of claims 1 to 13, wherein:
the one or more first sidelink resource pools and the one or more second sidelink resource pools are configured in a same carrier, or a same cell, or a same SL Bandwidth Part, in the following also referred to as BWP.

**15.** A device, comprising:

a memory (310); and
a processor (308) operatively coupled to the memory (310), wherein the processor (308) is configured to execute a program code (312) to perform the method steps as defined in any one of the preceding claims.

FIG. 1

FIG. 2

_300_

INPUT
DEVICE
_302_

OUTPUT
DEVICE
_304_

CONTROL CIRCUIT _306_

CPU _308_

MEMORY _310_

PROGRAM CODE _312_

TRANSCEIVER _314_

# FIG. 3

PROGRAM CODE *312*

APPLICATION LAYER *400*

LAYER 3 *402*

LAYER 2 *404*

LAYER 1 *406*

# FIG. 4

FIG. 5

(a) Fully staggered SL-PRS pattern
(Comb-4, 4-symbol)

(b) Partially staggered SL-PRS pattern
(Comb-4, 3/3/2-symbol)

(c) Unstaggered SL-PRS patterns
(Comb-4, 4-symbol)

# FIG. 6A  FIG. 6B  FIG. 6C

Table 3

| | PSSCH-related fields | SL PRS-related fields |
|---|---|---|
| Downlink control information for sidelink | - Resource pool index – bits<br>- Time gap – 3 bits<br>- HARQ process number – 4 bits.<br>- New data indicator – 1 bit.<br>- Lowest index of the subchannel allocation to the initial transmission – bits<br>- SCI format 1-A fields<br>  - Frequency resource assignment.<br>  - Time resource assignment.<br>- PSFCH-to-HARQ feedback timing indicator – bits<br>- PUCCH resource indicator – 3 bits<br>- Configuration index – 0 bit or 3 bits<br>- Counter sidelink assignment index – 2 bits<br>- Padding bits, if required | - Resource pool index – bits<br>- Time gap<br>- SL PRS resource information<br>- Resource timing<br>- Periodicity and offset<br>- Comb pattern<br>- Number of symbols<br>- SL PRS configuration index<br>- Padding bits, if required |

# FIG. 7

1000

Receiving a DCI for sidelink, wherein the DCI comprises information associated with sidelink resource type

1002

Interpreting/decoding/acquiring bits or fields in the DCI based on the information associated with sidelink resource type

1004

Determining sidelink resource(s) based on the interpretation/decoding/acquisition of bits or fields in the DCI

1006

Performing sidelink transmission on the sidelink resource(s)

1008

# FIG. 8

1010

1012

Determining sidelink resource(s), for a first device, associated with one sidelink resource type

1014

Generating a DCI for sidelink, wherein the DCI comprises information associated with the one sidelink resource type and comprises bits or fields associated with the sidelink resource(s)

1016

Transmitting the DCI to the first device

# FIG. 9

1020

Receiving configuration of one or more first
sidelink resource pools for at least sidelink
data transmission and configuration of one or
more second sidelink resource pools for
sidelink reference signal

1022

Receiving a DCI for sidelink, wherein the DCI
comprises a resource pool index
corresponding to one sidelink resource pool

1024

Determining the DCI for scheduling sidelink
data transmission or sidelink reference signal
transmission based on at least the resource
pool index or the one sidelink resource pool

1026

Acquiring or determining fields or information
in the DCI based on the determination that the
DCI is for scheduling sidelink data
transmission or sidelink reference signal
transmission

1028

Determining a sidelink resource based on the
acquired or determined fields, or the
information in the DCI

1030

Performing a sidelink transmission on the
sidelink resource in the one sidelink resource
pool

1032

# FIG. 10

1040

Transmitting, to a first device, configuration
of one or more first sidelink resource pools for
at least sidelink data transmission and
configuration of one or more second sidelink
resource pools for sidelink reference signal

1042

Determining a sidelink resource(s) associated
with one sidelink resource type in one sidelink
resource pool

1044

Generating a DCI for sidelink, wherein the
DCI comprises a resource pool index
corresponding to one sidelink resource pool
and comprises (following) fields or
information based on the one sidelink resource
type

1046

Transmitting the DCI to the first device

1048

# FIG. 11

Europäisches
Patentamt

European
Patent Office

Office européen
des brevets

# EUROPEAN SEARCH REPORT

Application Number

EP 23 20 0025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/165835 A1 (LENOVO BEIJING LTD [CN]) 11 August 2022 (2022-08-11) * paragraphs [0042], [0045], [0047], [0060], [0068]; figure 2 * ----- | 1-15 | INV. H04W72/232 H04L5/00 |
| X | DE 10 2021 113836 A1 (INTEL CORP [US]) 2 December 2021 (2021-12-02) * paragraphs [0002], [0007], [0020], [0025], [0027]; figure 4 * ----- | 1-15 | |
| A | LG ELECTRONICS: "Discussion on potential solutions for SL positioning", 3GPP DRAFT; R1-2205855, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Electronics; 20220822 - 20220826 12 August 2022 (2022-08-12), XP052273785, Retrieved from the Internet: URL:https://ftp.3gpp.org/tsg_ran/WG1_RL1/TSGR1_110/Docs/R1-2205855.zip R1-2205855 Discussion on potential solutions for SL positioning.docx [retrieved on 2022-08-12] * page 11, line 3 - line 18 * ----- | 1-15 | TECHNICAL FIELDS SEARCHED (IPC) H04W H04L |

The present search report has been drawn up for all claims

| Place of search | Date of completion of the search | Examiner |
|---|---|---|
| The Hague | 8 February 2024 | Palencia Gutiérrez |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 20 0025

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | | Publication date | Patent family member(s) | | Publication date |
|---|---|---|---|---|---|
| WO 2022165835 | A1 | 11-08-2022 | CN 116889044 | A | 13-10-2023 |
| | | | EP 4289199 | A1 | 13-12-2023 |
| | | | WO 2022165835 | A1 | 11-08-2022 |
| DE 102021113836 | A1 | 02-12-2021 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3GPP; TSG RAN; NR; Physical layer procedures for control (Release 17). *3GPP TS 38.213 V17.2.0,* June 2022
- 3GPP; TSG RAN; NR; Physical layer procedures for data (Release 17). *3GPP TS 38.214 V17.1.0,* March 2022
- 3GPP; TSGRAN; NR; Multiplexing and channel coding (Release 17). *3GPP TS 38.212 V17.1.0,* March 2022
- 3GPP; TSG RAN; NR; Physical channels and modulation (Release 17). *3GPP TS 38.211 V17.1.0,* March 2022
- 3GPP; TSG RAN; NR; Multiplexing and channel coding (Release 17). *3GPP TS 38.212 V17.1.0,* March 2022
- **INTEL.** Revised SID on Study on expanded and improved NR positioning. *RP-213588*

- **HUAWEI ; HISILICON.** Discussion on SL positioning solutions. *R1-2208453*
- **CHINA TELECOM.** Discussion on potential solutions for sidelink positioning. *R1-2208773*
- **INTEL CORPORATION.** Potential solutions for SL positioning. *R1-2209058*
- **ZTE.** Discussion on potential solutions for SL positioning. *R1-2209213*
- **LG ELECTRONICS.** Discussion on potential solutions for SL positioning. *R1-2209483*
- 3GPP; TSGRAN; NR; Physical layer procedures for control (Release 17). *3GPP TS 38.213 V17.2.0,* June 2022
- *3GPP TS 38.212 V17.1.0,* March 2022
- 3GPP; TSG RAN; NR. *3GPP TS 38.211 V17.1.0,* March 2022